# EUROPEAN PATENT APPLICATION

(11) **EP 4 572 520 A1**
(43) Date of publication of application: **18.06.2025**
(21) Application number: 23852446.6
(22) Date of filing: 01.08.2023
(51) Int. Cl.: H04W 76/15, H04W 8/24, H04W 76/20

(54) **COMMUNICATION DEVICE, BASE STATION, AND COMMUNICATION METHOD**

(30) Priority: 08.08.2022 JP 2022126647
(71) Applicant: DENSO CORPORATION, Kariya-city, Aichi 448-8661 (JP)
(72) Inventor: YAMAMOTO, Tomoyuki, Kariya-city, Aichi 448-8661 (JP)
(74) Representative: TBK
(86) International application number: PCT/JP2023/028158
(87) International publication number: WO 2024/034475

(57) **Abstract**

A communication apparatus (100) configured to communicate with a plurality of networks (200) by using a plurality of subscriber identity modules comprises a controller (130) configured to temporarily restrict a communication capability of the communication apparatus used for communication with a second network (200B) in a case of communicating with a first network (200A), and a communicator (120) configured to transmit restriction information for temporarily restricting the communication capability of the communication apparatus to the second network.

## Description

### Cross-Reference to Related Applications

This application is based on and claims the benefit of priority from Japanese Patent Application No. 2022-126647, filed on August 8, 2022, the entire contents of which are incorporated herein by reference.

### Technical Field

The present disclosure relates to a communication apparatus, a base station, and a communication method used in a mobile communication system.

### Background Art

In Release 18 of the 3rd Generation Partnership Project (hereinafter, referred to as 3GPP) (registered trademark), which is a mobile communication system standardization project, a work item for designing a feature for a communication apparatus including two transceivers to perform communication with a plurality of networks by using a plurality of subscriber identity modules has been launched.

In a case where such a communication apparatus uses two transceivers for communication with a certain network (hereinafter, referred to as a first network), when one of the transceivers is independently switched for communication with another network (hereinafter, referred to as a second network), the first network performs communication with the communication apparatus without knowing the switching of the one of the transceivers, as a result of which data loss may occur between the communication apparatus and the first network.

Therefore, in Release 18 of 3GPP, it has been studied to temporarily restrict a communication capability of the communication apparatus used for communication with the first network so that one of the transceivers can be used for communication with the second network (see Non Patent Literature 1).

### Citation List

### Non Patent Literature

Non Patent Literature 1: 3GPP Contribution: "RP-220955"

### Summary of Invention

A communication apparatus according to a first aspect is a communication apparatus configured to communicate with a plurality of networks by using a plurality of subscriber identity modules. The communication apparatus comprises a controller configured to temporarily restrict a communication capability of the communication apparatus used for communication with a second network in a case of communicating with a first network, and a communicator configured to transmit restriction information for temporarily restricting the communication capability to the second network.

A base station according to a second aspect is a base station of a network in a mobile communication system having radio communication with a communication apparatus configured to communicate with a plurality of networks by using a plurality of subscriber identity modules. The base station comprises a communicator configured to receive, from the communication apparatus communicating with another network, restriction information for temporarily restricting a communication capability of the communication apparatus used for communication with the network.

A communication method according to a third aspect is a communication method executed by a communication apparatus configured to communicate with a plurality of networks by using a plurality of subscriber identity modules. The communication method comprises the steps of: temporarily restricting a communication capability of the communication apparatus used for communication with a second network in a case of communicating with a first network; and transmitting restriction information for temporarily restricting the communication capability to the second network.

### Brief Description of Drawings

Objects, features, advantages, and the like of the present disclosure will become more apparent from the following detailed description with reference to the accompanying drawings.
Fig. 1 is a diagram illustrating a configuration example of a mobile communication system according to an embodiment.
Fig. 2 is a diagram illustrating a configuration example of a protocol stack of the mobile communication system according to the embodiment.
Fig. 3 is a diagram (part 1) for describing an assumed scenario.
Fig. 4 is a diagram (part 2) for describing the assumed scenario.
Fig. 5 is a diagram illustrating a configuration example of a user equipment (UE) according to the embodiment.

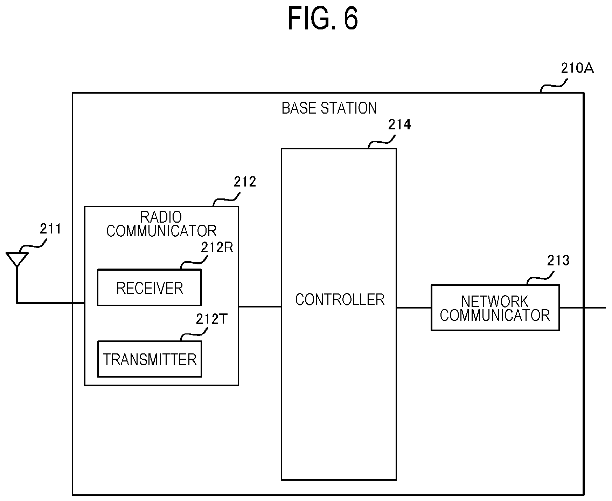

Fig. 6 is a diagram illustrating a configuration of a base station according to the embodiment.
Fig. 7 is a sequence diagram (part 1) illustrating a first operation example according to the embodiment.
Fig. 8 is a sequence diagram (part 2) illustrating the first operation example according to the embodiment.
Fig. 9 is a diagram (part 1) for describing an information element in the first operation example according to the embodiment.
Fig. 10 is a diagram (part 2) for describing the information element in the first operation example according to the embodiment.
Fig. 11 is a diagram (part 3) for describing the information element in the first operation example according to the embodiment.
Fig. 12 is a sequence diagram illustrating a second operation example according to the embodiment.
Fig. 13 is a diagram for describing an information element in the second operation example according to the embodiment.

### Description of Embodiments

A mobile communication system according to an embodiment will be described with reference to the drawings. In the description of the drawings, the same or similar parts are denoted by the same or similar reference numerals.

However, currently, in the existing 3GPP technical specification, there is no specific mechanism for temporarily restricting a communication capability used for communication with a second network in order for a communication apparatus to perform communication with the second network while communicating with a first network. Therefore, there is a concern that the network cannot recognize that the communication apparatus desires temporary restriction of the communication capability, and the communication apparatus and the network thus cannot be appropriately synchronized with each other for the temporary restriction of the communication capability.

Therefore, an object of the present disclosure is to provide a communication apparatus, a base station, and a communication method that enable a network that communicates with a communication apparatus capable of communicating with a plurality of networks using a plurality of subscriber identity modules to recognize temporary restriction of a communication capability of the communication apparatus.

### [Embodiment]

### (System Configuration)

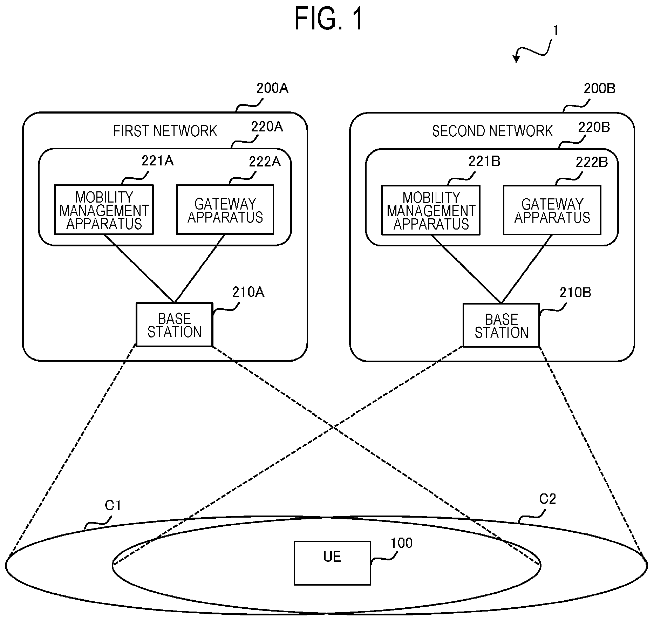

A configuration of a mobile communication system 1 according to an embodiment will be described with reference to Fig. 1. Hereinafter, an example in which a mobile communication system 1 is the 5th generation system (5G/New Radio (NR)) in the 3GPP standard will be mainly described, but the 4th generation system (4G/Long Term Evolution (LTE)) and/or the 6th generation system may be at least partially applied to the mobile communication system 1.

As illustrated in Fig. 1, the mobile communication system 1 according to the embodiment includes a user equipment (UE) 100, a first network 200A, and a second network 200B.

The UE 100 is an example of a communication apparatus. The UE 100 may be a mobile radio communication apparatus. The UE 100 may be an apparatus used by a user. For example, the UE 100 is a mobile phone terminal (including a smartphone), a tablet terminal, a laptop personal computer (PC), a communication module (including a communication card or a chipset), a sensor or an apparatus provided in the sensor, a vehicle or an apparatus provided in the vehicle (for example, a vehicle UE), or an aerial vehicle or an apparatus provided in the aerial vehicle (for example, an aerial UE). Note that the UE 100 may be referred to as another term such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

The UE 100 can communicate with a plurality of networks by using a plurality of subscriber identity modules (SIM). The UE 100 may be a multi-SIM device corresponding to a plurality of SIMs. Hereinafter, an example in which the UE 100 supports two SIMs will be mainly described. However, the UE 100 may also support three or more SIMs. "Supporting a plurality of SIMs" means that the UE 100 has a capability to handle a plurality of SIMs, and the UE 100 does not have to be necessarily equipped with a plurality of SIMs. Such a UE 100 may be referred to as a "UE supporting a plurality of SIMs". Note that the SIM is not limited to a card type SIM (so-called a SIM card), and may be an embedded SIM (so-called an eSIM) that is integrated in the UE 100 in advance. The SIM may be referred to as a universal subscriber identity module (USIM).

The first network 200A is a network associated with one SIM of the UE 100. The second network 200B is a network associated with the other SIM of the UE 100. It is assumed that the UE 100 has performed location registration in the first network 200A by using one SIM and has performed location registration in the second network 200B by using the other SIM. That is, the UE 100 exists in each of the first network 200A and the second network 200B. The first network 200A and the second network 200B may be networks of different communication operators. However, the first network 200A and the second network 200B may be networks of the same communication operator. Different public land mobile network (PLMN) IDs may be allocated to the first network 200A and the second network 200B.

The first network 200A includes a base station 210A included in a radio access network and a core network 220A. The core network 220A includes a mobility management apparatus 221A and a gateway apparatus 222A as core network apparatuses. Similarly, the second network 200B includes a base station 210B included in a radio access network and a core network 220B. The core network 220B includes a mobility management apparatus 221B and a gateway apparatus 222B as core network apparatuses. Hereinafter, the base stations 210A and 200B will be simply referred to as a base station 210 when not distinguished, the mobility management apparatuses 221A and 221B will be simply referred to as a mobility management apparatus 221 when not distinguished, and the gateway apparatuses 222A and 222B will be simply referred to as a gateway apparatus 222 when not distinguished.

The base station 210 is a radio communication apparatus that performs radio communication with the UE 100. The base station 210 manages one or more cells. The base station 210 performs radio communication with the UE 100 that has established a connection with its cell in a radio resource control (RRC) layer. The base station 210 has a radio resource management (RRM) feature, a routing feature for user data (hereinafter, simply referred to as "data"), a measurement control feature for mobility control and scheduling, and the like. The "cell" is used as a term indicating a minimum unit of a radio communication area. The "cell" is also used as a term indicating a feature of performing radio communication with the UE 100 or a resource for performing radio communication with the UE 100. One cell belongs to one carrier frequency. Fig. 1 illustrates an example in which the base station 210A manages a cell C1 and the base station 210B manages a cell C2. The UE 100 is located in an overlapping region of the cell C1 and the cell C2.

The base station 210 may be a gNodeB (gNB), which is a 5G/NR base station, or an eNodeB (eNB), which is a 4G/LTE base station. Hereinafter, an example in which the base station 210 is a gNB will be mainly described. A feature of the base station 210 may be divided into a central unit (CU) and a distributed unit (DU). The base station 210 may be a relay node such as an integrated access and backhaul (IAB) node.

The mobility management apparatus 221 is an apparatus supporting a control plane, and is an apparatus that performs various types of mobility management for the UE 100. The mobility management apparatus 221 communicates with the UE 100 by using non-access stratum (NAS) signaling and manages information regarding a tracking area in which the UE 100 exists. The mobility management apparatus 221 performs paging through the base station 210 to notify the UE 100 of an incoming call. The mobility management apparatus 221 may be an access and mobility management function (AMF) in 5G/NR or a mobility management entity (MME) in 4G/LTE.

The gateway apparatus 222 is an apparatus supporting a user plane and performs data transfer control of the UE 100. The gateway apparatus 222 may be a user plane function (UPF) in 5G/NR or a serving gateway (S-GW) in 4G/LTE.

### (Configuration Example of Protocol Stack)

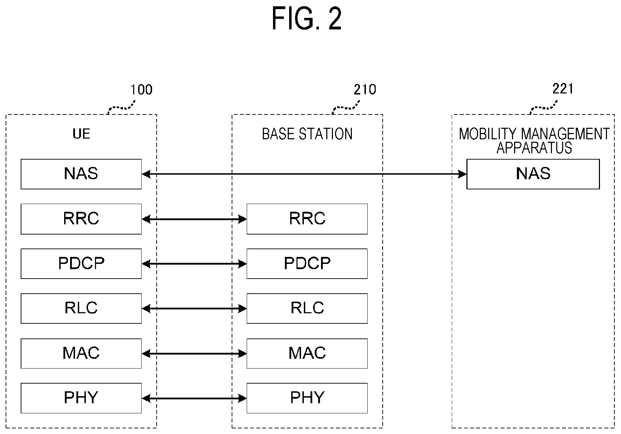

A configuration example of a protocol stack of the mobile communication system 1 will be described with reference to Fig. 2. As illustrated in Fig. 2, a protocol of a radio section between the UE 100 and the base station 210 includes a physical (PHY) layer, a medium access control (MAC) layer, a radio link control (RLC) layer, a packet data convergence protocol (PDCP) layer, and a radio resource control (RRC) layer.

The PHY layer performs coding and decoding, modulation and demodulation, antenna mapping and demapping, and resource mapping and demapping. Data and control information are transmitted between the PHY layer of the UE 100 and the PHY layer of the base station 210 via a physical channel.

The MAC layer performs data priority control, retransmission processing by hybrid ARQ (HARQ), a random access procedure, and the like. Data and control information are transmitted between the MAC layer of the UE 100 and the MAC layer of the base station 210 via a transport channel. The MAC layer of the base station 210 includes a scheduler. The scheduler determines uplink and downlink transport formats (transport block size and modulation and coding scheme (MCS)) and resources to be allocated to the UE 100.

The RLC layer transmits data to the RLC layer on a reception side by using the features of the MAC layer and the PHY layer. Data and control information are transmitted between the RLC layer of the UE 100 and the RLC layer of the base station 210 via a logical channel.

The PDCP layer performs header compression/decompression and encryption/decryption.

A service data adaptation protocol (SDAP) layer may be provided as an upper layer of the PDCP layer. The service data adaptation protocol (SDAP) layer performs mapping between an IP flow which is a unit in which a core network performs quality of service (QoS) control, and a radio bearer which is a unit in which an access stratum (AS) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 210. In a case where there is an RRC connection between the RRC of the UE 100 and the RRC of the base station 210, the UE 100 is in an RRC connected state. In a case where there is no RRC connection between the RRC of the UE 100 and the RRC of the base station 210, the UE 100 is in an RRC idle state. In a case where an RRC connection between the RRC of the UE 100 and the RRC of the base station 210 is suspended, the UE 100 is in an RRC inactive state.

A non-access stratum (NAS) layer located above the RRC layer performs session management and mobility management of the UE 100. NAS signaling is transmitted between the NAS layer of the UE 100 and the NAS layer of the mobility management apparatus 221.

A mode (NAS state) in the NAS layer of the UE 100 includes an idle mode and a connected mode. In the connected mode, context information of the UE 100 is stored in the network, and in the idle mode, the context information of the UE 100 is not stored in the network. In a case where the UE 100 is in the connected mode, the UE 100 is in the RRC connected state or the RRC inactive state. In a case where the UE 100 is in the idle mode, the UE 100 is in the RRC idle state.

The mode in the NAS layer may be a 5G mobility management (5GMM) mode. In this mode, the connected mode may be a 5GMM-connected mode, and the idle mode may be a 5GMM-idle mode.

Note that the UE 100 has an application layer and the like in addition to a protocol of a radio interface.

### (Assumed Scenario)

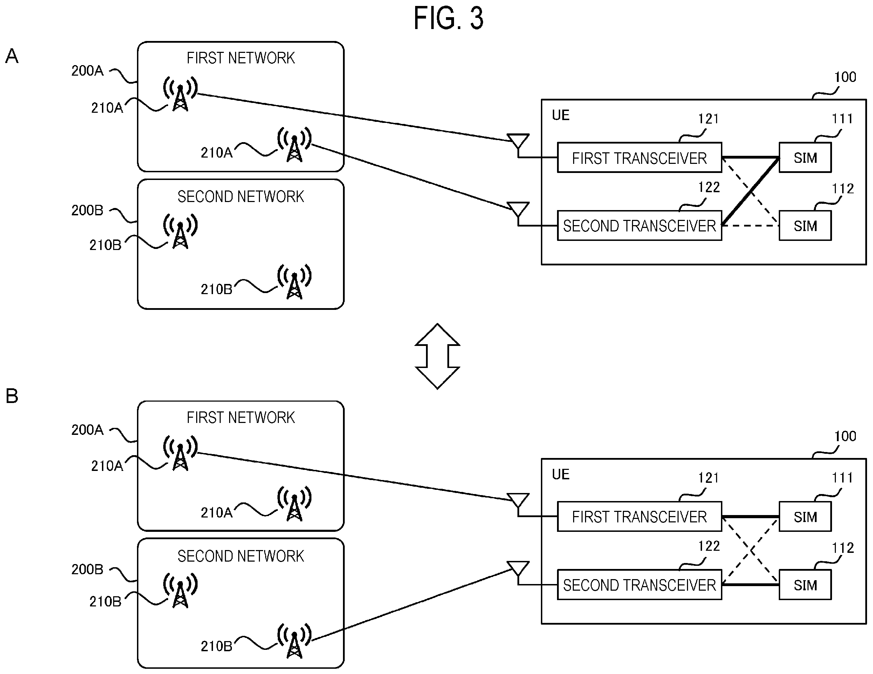

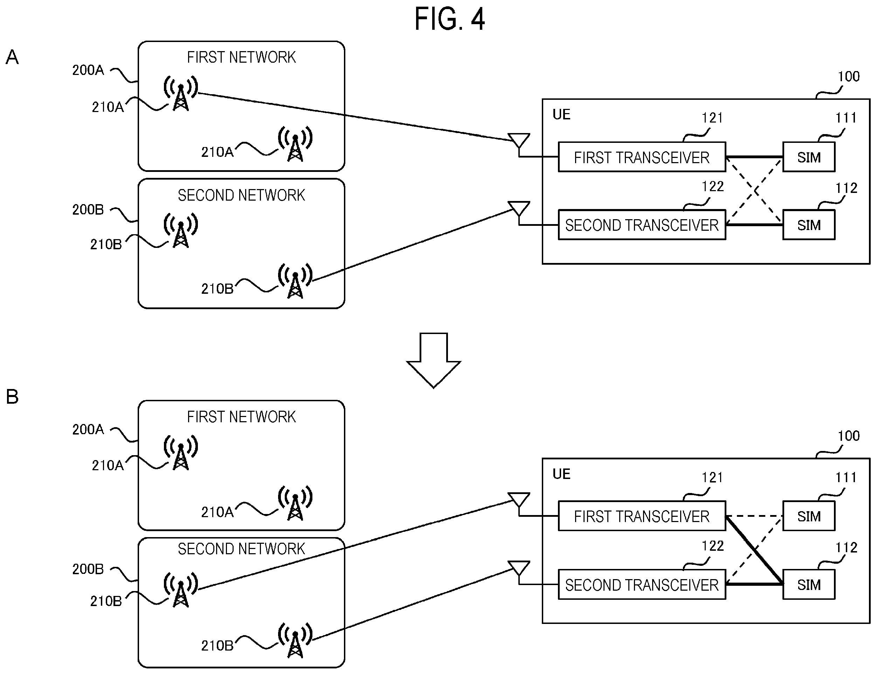

An assumed scenario in the mobile communication system 1 according to the embodiment will be described by using Figs. 3 and 4. In Release 18 of 3GPP, which is a standardization project of the mobile communication system 1, a work item for designing a feature for the UE 100 including two transceivers to perform communication with a plurality of networks by using a plurality of SIMs has been launched.

For example, as illustrated in Fig. 3A, in a case where the UE 100 performs communication with the first network 200A by using a SIM 111, the UE 100 can use a first transceiver 121 and a second transceiver 122 for communication with the first network 200A. As illustrated in Fig. 3B, when the UE 100 performs communication with the second network 200B by using a SIM 112, it is assumed that the second transceiver 122 is switched for communication with the second network 200B. As a result, the UE 100 can perform communication with the second network 200B by using the second transceiver 122 while maintaining communication with the first network 200A by using the first transceiver 121.

Here, in a case where the UE 100 uses two transceivers for communication with the first network 200A, when one of the transceivers (for example, the second transceiver 122) is independently switched for communication with the second network 200B, the first network 200A performs communication with the UE 100 without knowing the switching of the second transceiver 122, as a result of which data loss may occur between the UE 100 and the first network 200A.

Therefore, in Release 18 of 3GPP, it has been studied to temporarily restrict a communication capability of the UE 100 used for communication with the first network 200A so that one of the transceivers can be used for communication with the second network 200B.

However, currently, in the existing 3GPP technical specification, there is no specific mechanism for temporarily restricting the communication capability used for communication with the second network 200B in order for the UE 100 to perform communication with the second network 200B while communicating with the first network 200A. Therefore, there is a concern that the second network 200B cannot recognize that the UE 100 desires the temporary restriction of the communication capability, and the UE 100 and the second network 200B cannot be appropriately synchronized with each other for the temporary restriction of the communication capability.

For example, in a case where only the second transceiver 122 can be used for communication with the second network 200B because the UE 100 uses the first transceiver 121 for communication with the first network 200A, the second network 200B performs communication with the UE 100 without knowing that the UE 100 can use only the second transceiver 122, as a result of which data loss may occur between the UE 100 and the second network 200B. In an embodiment described below, an operation for enabling the second network 200B communicating with the UE 100 capable of communicating with a plurality of networks by using a plurality of SIMs to recognize the temporary restriction of the communication capability of the UE 100 will be described.

Further, as illustrated in Figs. 4A and 4B, it is assumed that the first transceiver 121 is switched for communication with the second network 200B in a case where the UE 100 that has used the first transceiver 121 for communication with the first network 200A and has used the second transceiver 122 for communication with the second network 200B has ended communication with the first network 200A.

However, currently, in the existing 3GPP technical specification, there is no specific mechanism for releasing or changing the restriction of the communication capability of the UE 100 between the UE 100 and the second network 200B, for example, after the UE 100 that has temporarily restricted the communication capability used for communication with the first network 200A and the second network 200B has ended communication with the first network 200A. For this reason, there is a concern that the second network 200B cannot recognize that the UE 100 desires to release or change the temporary restriction of the communication capability, and the UE 100 and the second network 200B thus cannot be appropriately synchronized with each other for the temporary restriction of the communication capability. In an embodiment described below, an operation for enabling a network communicating with the UE 100 capable of communicating with a plurality of networks by using a plurality of SIMs to recognize the temporary restriction of the communication capability of the UE 100 will be described.

In the existing 3GPP technical specification, there is no specific mechanism for temporarily restricting the communication capability of the UE 100 used for communication with the network, and thus, there is a concern that the UE 100 cannot appropriately restrict the communication capability. In an embodiment described below, an operation for enabling the UE 100 capable of communicating with a plurality of networks by using a plurality of SIMs to appropriately restrict the communication capability will be described.

### (Configuration Example of UE)

A configuration example of the UE 100 will be described with reference to Fig. 4. As illustrated in Fig. 4, the UE 100 includes an antenna 101, an antenna 102, the SIM 111, the SIM 112, a communicator 120, and a controller 130. The antenna 101 and the antenna 102 may be provided outside the UE 100. The SIM 111 and the SIM 112 are SIM cards or eSIMs.

The SIM 111 stores subscriber information and configuration information necessary for the UE 100 to communicate with the first network 200A. The SIM 111 stores identification information of the UE 100 for the first network 200A, for example, a telephone number, an international mobile subscriber identity (IMSI), and the like. The SIM 111 corresponds to a first subscriber information module. The UE 100 communicates with the first network 200A by using the SIM 111.

The SIM 112 stores subscriber information and configuration information necessary for the UE 100 to communicate with the second network 200B. The SIM 112 stores identification information of the UE 100 for the second network 200B, for example, a telephone number, an IMSI, and the like. The SIM 112 corresponds to a second subscriber information module. The UE 100 communicates with the second network 200B by using the SIM 112.

The communicator 120 performs radio communication with the first network 200A and radio communication with the second network 200B via the antenna 101 and the antenna 102 under the control of the controller 130. The communicator 120 includes a plurality of transceivers. The transceiver may be referred to as a transceiver or a radio frequency (RF) chain. In the present embodiment, the communicator 120 includes the first transceiver 121 and the second transceiver 122. The first transceiver 121 and the second transceiver 122 each include a receiver 120R and a transmitter 120T. The receiver 120R converts a radio signal received by each antenna into a received signal that is a baseband signal, performs signal processing on the received signal, and outputs the processed signal to the controller 130. The transmitter 120T performs signal processing on a transmitted signal that is a baseband signal output from the controller 130, converts the processed transmitted signal into a radio signal, and transmits the radio signal from each antenna. The receiver 120R may be referred to as a receiver, an Rx chain or an Rx branch. The transmitter 120T may be referred to as a transmitter, a Tx chain or a Tx branch. In the present embodiment, the first transceiver 121 includes a first receiver 121R as the receiver 120R, and includes a first transmitter 121T as the transmitter 120T. The second transceiver 122 includes a second receiver 122R as the receiver 120R and a second transmitter 122T as the transmitter 120T.

The controller 130 controls the communicator 120 and performs various types of control in the UE 100. The controller 130 controls communication with the first network 200A by using the SIM 111 and controls communication with the second network 200B by using the SIM 112. The controller 130 includes at least one processor and at least one memory. The memory stores a program to be executed by the processor and information to be used for processing performed by the processor. The memory may include at least one of a read only memory (ROM), an erasable programmable read-only memory (EPROM), an electrically erasable programmable read only memory (EEPROM), a random access memory (RAM), and a flash memory. The processor may include a digital signal processor (DSP) that performs digital processing on a digital signal and a central processing unit (CPU) that executes a program. Note that a part of the memory may be provided in the communicator 120. In addition, the DSP may be provided in the communicator 120.

The controller 130 includes an RRC processor 131 and an NAS processor 132. The RRC processor 131 performs processing in the RRC layer. The NAS processor 132 performs processing in the NAS layer which is a layer above the RRC layer. Note that the RRC processor 131 and the NAS processor 132 may be implemented by one processor or may be implemented by a plurality of processors.

The UE 100 configured in this manner can communicate with a plurality of networks by using a plurality of SIMs. In the case of communicating with the first network 200A, the controller 130 temporarily restricts the communication capability of the UE 100 used for communication with the second network 200B. The communicator 120 transmits, to the second network 200B, restriction information for temporarily restricting the communication capability of the UE 100 used for communication with the second network 200B. As a result, the second network 200B can recognize the temporary restriction of the communication capability of the UE 100 based on the restriction information. Therefore, it is possible to facilitate appropriate synchronization between the UE 100 and the second network 200B for the temporary restriction of the communication capability.

Note that an operation of a functional unit (specifically, at least one of the antenna 101, the antenna 102, the SIM 111, the SIM 112, the communicator 120, and the controller 130 (for example, the RRC processor 131 and the NAS processor 132)) included in the UE 100 may be described as an operation of the UE 100.

### (Configuration Example of Base Station)

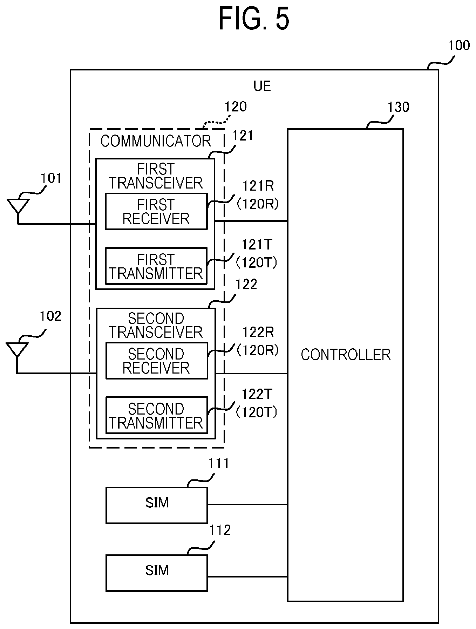

A configuration example of the base station 210A of the first network 200A will be described with reference to Fig. 5. Note that, since the base station 210B of the second network 200B also has the same configuration as the base station 210A, the description thereof will be omitted. As illustrated in Fig. 5, the base station 210A includes an antenna 211, the radio communicator 212, a network communicator 213, and a controller 214.

The radio communicator 212 performs communication with the UE 100 via the antenna 211 under the control of the controller 214. The radio communicator 212 includes a receiver 212R and a transmitter 212T. The receiver 212R converts a radio signal received by the antenna 211 into a received signal that is a baseband signal, performs signal processing on the received signal, and outputs the processed signal to the controller 214. The transmitter 212T performs signal processing on a transmitted signal that is a baseband signal output from the controller 214, converts the processed transmitted signal into a radio signal, and transmits the radio signal from the antenna 211.

The network communicator 213 is connected to the core network 220A. The network communicator 213 performs network communication with the mobility management apparatus 221A and the gateway apparatus 222A under the control of the controller 214.

The controller 214 controls the radio communicator 212 and performs various types of control in the base station 210A. The controller 214 includes at least one processor and at least one memory. The memory stores a program to be executed by the processor and information to be used for processing performed by the processor. The memory may include at least one of a ROM, an EPROM, an EEPROM, a RAM, and a flash memory. The processor may include a digital signal processor (DSP) that performs digital processing on a digital signal and a central processing unit (CPU) that executes a program. Note that a part of the memory may be provided in the radio communicator 212. In addition, the DSP may be provided in the radio communicator 212.

In the base station 210 configured as described above, the radio communicator 212 receives, from the UE 100 communicating with another network, the restriction information for temporarily restricting the communication capability of the UE 100 used for communication with the second network 200B. As a result, the second network 200B can recognize the temporary restriction of the communication capability of the UE 100 based on the restriction information. Therefore, it is possible to facilitate appropriate synchronization between the UE 100 and the second network 200B for the temporary restriction of the communication capability.

Note that an operation of a functional unit (specifically, at least one of the antenna 211, the radio communicator 212, the network communicator 213, and the controller 214) included in the base station 210A may be described as an operation of the base station 210A.

### (Operation of Mobile Communication System)

### (1) First Operation Example

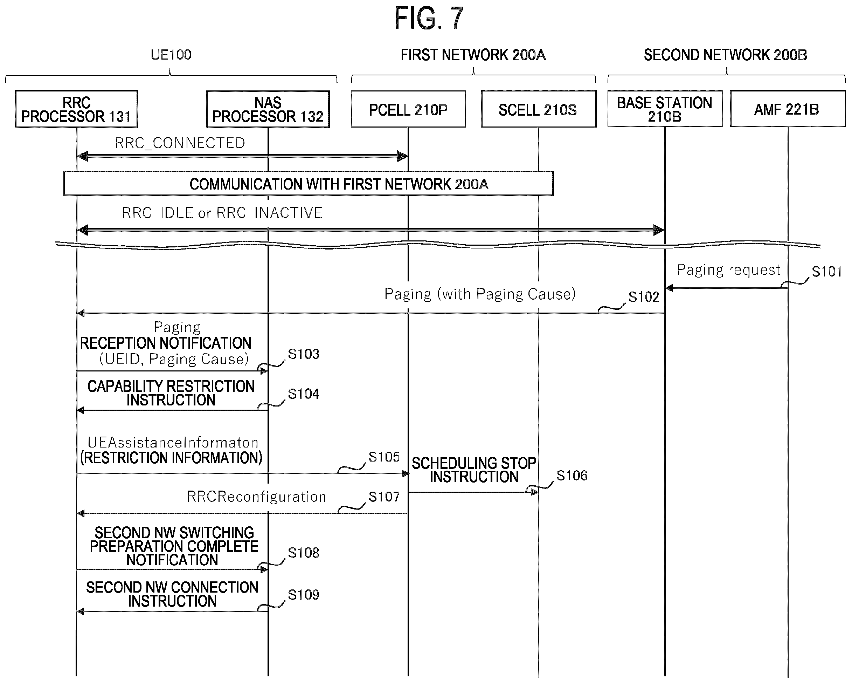

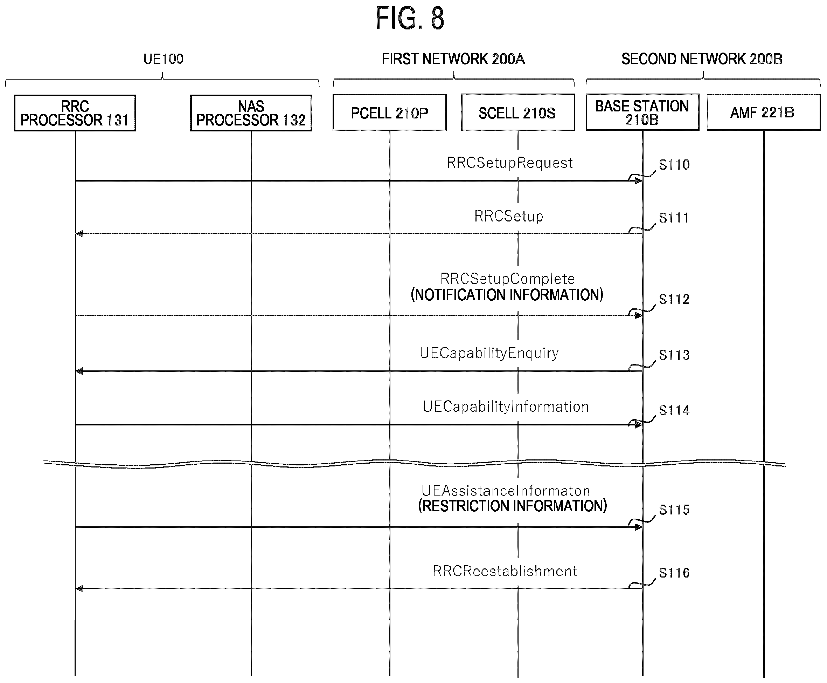

A first operation example of the mobile communication system 1 will be described with reference to Figs. 7 to 12. In this operation example, the UE 100 exists in a primary cell (PCell) 210P and a secondary cell (SCell) 210S of the first network 200A. One base station 210A of the first network 200A may manage the PCell 210P and the SCell 210S. Alternatively, a certain base station 210A of the first network 200A may manage the PCell 210P, and another base station 210A of the first network 200A may manage the SCell 210S. Note that the PCell 210P may be a PCell in a carrier aggregation operation. Further, the SCell 210S may be an SCell in the carrier aggregation operation. Further, the PCell 210P may be a PCell belonging to a master cell group (MCG) in a dual connectivity operation. Further, the SCell 210S may be a primary secondary cell (PSCell) belonging to a secondary cell group (SCG) in the dual connectivity operation. Further, the SCell 210S may be a secondary cell (SCell) belonging to the master cell group (MCG) and/or the secondary cell group (SCG) in the dual connectivity operation.

Here, the PCell of the master cell group (MCG) and/or the primary secondary cell (PSCell) belonging to the secondary cell group (SCG) in the dual connectivity operation are also referred to as special cells (SPCells). Further, in the dual connectivity operation, a MAC entity may be associated with each of the master cell group (MCG) and the secondary cell group (SCG).

Hereinafter, for ease of description, in the present embodiment, the PCell belonging to the master cell group (MCG) is also referred to as the PCell. The primary secondary cell (PSCell) belonging to the secondary cell group (SCG) is also referred to as the secondary cell. That is, in the present embodiment, the PCell may be replaced with the PCell belonging to the master cell group (MCG). In the present embodiment, the secondary cell may be replaced with the primary secondary cell (PSCell) and/or the secondary cell (SCell) belonging to the secondary cell group (SCG).

As illustrated in Fig. 7, the UE 100 is in the RRC connected state for the first network 200A. In the UE 100 in the RRC connected state, the RRC connection is established between the first network 200A and the UE 100. Therefore, the controller 130 of the UE 100 and the controller 214 of the base station 210 perform control to establish the RRC connection between the UE 100 and the base station 210.

In addition, the UE 100 performs communication with the first network 200A. The UE 100 is in communication with the first network 200A. For example, the UE 100 is provided with a service such as a voice call from the first network 200A. Note that "in communication" means that the UE 100 is at least in the RRC connected state in the network. Therefore, in the case of being in communication with the first network 200A, the UE 100 continuously or discontinuously exchanges data with the network.

As illustrated in Fig. 7, the UE 100 is in the RRC idle state or the RRC inactive state for the second network 200B. The UE 100 monitors paging from the second network 200B or receives system block information from the second network 200B while maintaining the RRC connected state in the first network 200A. For example, the UE 100 can monitor the paging or receive the system block information in the second network 200B during a communication interruption duration with the first network 200A.

Hereinafter, communication between the UE 100 and the base station 210A may be communication between the UE 100 and a cell (specifically, the PCell 210P and the SCell 210S) of the base station 210A, that is, a cell in which the UE 100 exists, for the UE 100. The same applies to communication between the UE 100 and the base station 210B. Furthermore, communication between the UE 100 and a node (for example, the base station 210A (that is, the PCell 210P and the SCell 210S), the mobility management apparatus 221A, and the gateway apparatus 222A) belonging to the first network 200A may be referred to as communication between the UE 100 and the first network 200A. The same applies to the UE 100 and a node belonging to the second network 200B.

Hereinafter, the UE 100 performs communication (specifically, transmission and reception/notification of a message or the like) with the first network 200A via the communicator 120 (the receiver 120R and/or the transmitter 120T), but for convenience of description, the description that the communication is communication via the communicator 120 will be omitted as appropriate. Similarly, the description that communication between the UE 100 and the second network 200B is communication via the communicator 120 will be omitted as appropriate. Therefore, transmission and/or reception of a message and the like by the UE 100 may be transmission and/or reception of a message and the like by the communicator 120 (the receiver 120R and/or the transmitter 120T) of the UE 100.

### Step S101:

In the second network 200B, the AMF 221B transmits, to the base station 210B, a paging request (Paging request) for requesting transmission of the paging addressed to the UE 100. The network communicator 213 of the base station 210B receives the paging request.

The paging request may include paging cause information (Paging Cause) indicating a cause of the paging. The paging cause information may indicate, for example, whether or not the cause of the paging is a voice call.

### Step S102:

The radio communicator 212 of the base station 210B transmits a paging message (Paging) addressed to the UE 100 in response to the reception of the paging request. The RRC processor 131 (the receiver 120R) of the UE 100 receives the paging message from the base station 210B. The RRC processor 131 receives the paging message from the base station 210B when the UE 100 is in the RRC idle state or the RRC inactive state for the second network 200B during communication with the first network 200A. The UE 100 may receive the paging message via the first transceiver 121 or may receive the paging message via the second transceiver 122.

The paging message is used for notification to one or more UEs 100. The paging message is a message in the RRC layer. The paging message includes, for example, an ID of the UE 100. More specifically, for example, the paging message includes a list of paging records, and one paging record in the list includes the ID of the UE 100. For example, the ID is a 5G-S-TMSI or a full inactive radio network temporary identifier (I-RNTI) of the UE 100. The paging message may include the paging cause information (Paging Cause). The paging cause information may indicate, for example, that the cause of the paging is a voice service. The paging cause information may be associated with the ID of the UE 100, for example.

In a case where the paging message includes the ID of the UE 100, and the UE 100 is in the RRC inactive state or the RRC idle state for the second network 200B when being in communication with the first network 200A, the RRC processor 131 can perform processing of step S103.

In a case where the paging message includes the ID of the UE 100, and the UE 100 is not in communication with the first network 200A, for example, the UE 100 is in the RRC idle state or the RRC inactive state for the first network 200A, the RRC processor 131 may perform specified processing when the paging message is received without performing the processing of step S103.

### Step S103:

The RRC processor 131 provides a paging reception notification to the NAS processor 132. The NAS processor 132 receives the paging reception notification from the RRC processor 131. The paging reception notification is for notifying that the UE 100 has received the paging. The RRC processor 131 may indicate to the NAS processor 132 that the paging message has been received based on the paging reception notification in the second network 200B.

The paging reception notification may include the paging cause information (Paging Cause). Note that, for example, in a case where the UE 100 is in the RRC idle state, the paging reception notification may include the identifier (UE ID) of the UE 100.

In response to the reception of the paging message, the controller 130 may determine whether or not to temporarily restrict the communication capability of the UE 100 used for communication with the first network 200A. For example, the controller 130 may determine whether or not to temporarily restrict the communication capability based on the paging cause information. For example, in a case where the paging cause information indicates a voice service, the controller 130 may determine to temporarily restrict the communication capability. In a case where the paging cause information indicates a service other than a voice service, the controller 130 may determine not to temporarily restrict the communication capability.

Furthermore, the controller 130 may determine whether or not to temporarily restrict the communication capability based on, for example, an input from a user. For example, in a case where the input from the user prefers communication with the second network 200B, the controller 130 may determine whether or not to temporarily restrict the communication capability. The controller 130 may determine not to temporarily restrict the communication capability in a case where the input from the user does not prefer communication with the second network 200B or in a case where the input from the user that recommends communication with the second network 200B does not occur for a designated duration after the paging is received.

Note that the determination may be performed in the NAS processor 132, or the determination may be performed in an upper layer above the NAS processor. When the determination is made in the upper layer, the determination result may be provided to the NAS processor 132.

In a case where it is determined to temporarily restrict the communication capability of the UE 100 used for communication with the first network 200A, the NAS processor 132 performs the processing of step S104. On the other hand, in a case where it is determined not to temporarily restrict the communication capability of the UE 100 used for communication with the first network 200A, the controller 130 may perform the following determination without performing the processing of step S104.

In the case of not temporarily restricting the communication capability, the controller 130 may determine whether or not to prioritize communication with the first network 200A over communication with the second network 200B based on, for example, the paging cause information. In a case where communication with the first network 200A is prioritized, the controller 130 may perform control to transmit, to the second network 200B, a notification indicating that no response is made to the paging from the second network 200B. On the other hand, in a case where communication with the second network 200B is prioritized, the controller 130 may perform control to transition from the RRC connected state to the RRC idle state or the RRC inactive state for the first network 200A and transition to the RRC connected state for the second network 200B. The controller 130 may establish the RRC connection with the second network 200B and perform communication with the second network 200B.

### Step S104:

The NAS processor 132 provides a capability restriction instruction to the RRC processor 131. The RRC processor 131 receives the capability restriction instruction from the NAS processor 132. The capability restriction instruction may be for instructing transmission of the restriction information described below. The capability restriction instruction may indicate a content of the restriction information.

### Step S105:

The RRC processor 131 performs control to transmit the restriction information to the first network 200A for communication with the second network 200B. The communicator 120 transmits the restriction information to the first network 200A for communication with the second network 200B. Specifically, the communicator 120 transmits the restriction information to the PCell 210P. The communicator 120 may transmit a message including the restriction information to the PCell 210P. The radio communicator 212 of the base station 210A receives the restriction information from the UE 100 in the PCell 210P.

For communication with the second network 200B, the restriction information is used to temporarily restrict the communication capability of the UE 100 used for communication with the first network 200A. Note that the communication capability of the UE 100 does not simply refer to a capability of the UE 100, and may be referred to as, for example, a communication resource allocated to the UE 100, a radio resource scheduled for the UE 100, or the like. The temporarily restricted communication capability may be a communication resource associated with a transceiver (that is, the transmitter and/or the receiver) used for communication with the second network 200B.

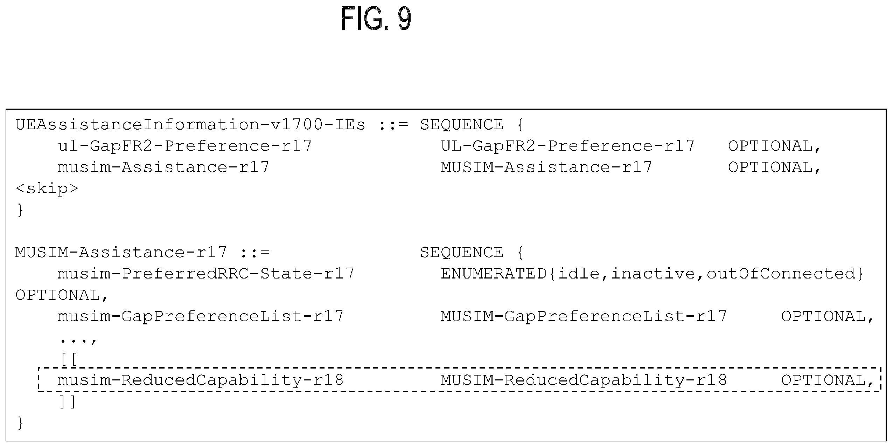

As illustrated in Fig. 9, the controller 130 (for example, the RRC processor 131) may include the restriction information (for example, MUSIM-ReducedCapability) in a multiple universal subscriber identity module (MUSIM) assistance information element (that is, MUSIM-Assistance) used to provide MUSIM assistance information. The communicator 120 may transmit the MUSIM assistance information including the restriction information to the first network 200A. The communicator 120 may transmit a UE assistance information (that is, UEAssistanceInformation) message including the MUSIM assistance information including the restriction information to the first network 200A. Note that the UE assistance information message is a message used for an indication of the UE assistance information to the network. The MUSIM assistance information element may be, for example, information used for an MUSIM operation of performing communication with a plurality of networks by using a plurality of SIMs.

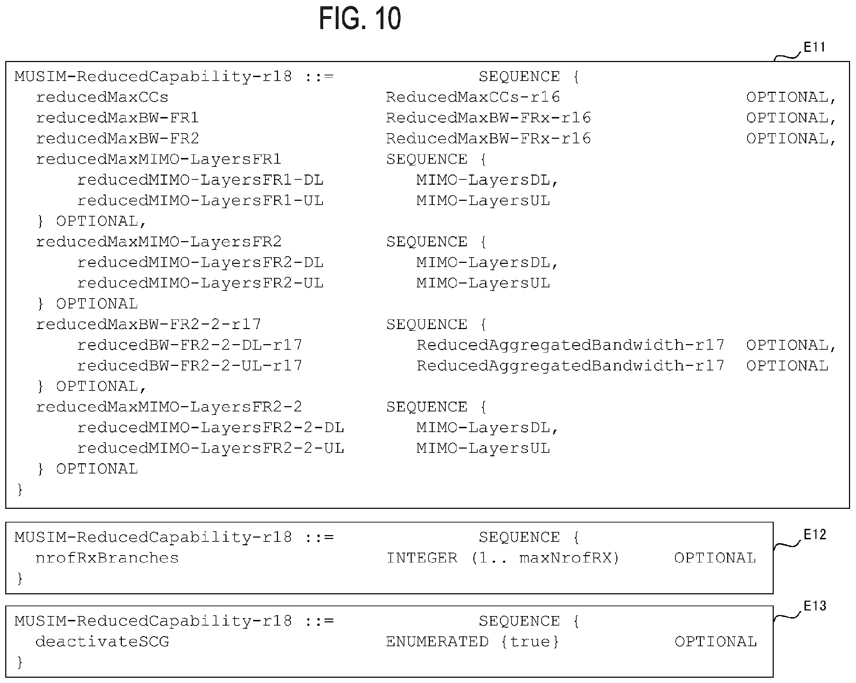

As illustrated in E11 of Fig. 10, the controller 130 may include at least one of information for restricting the secondary cell, information for restricting a frequency band, and information for restricting a multiple-input and multiple-output (MIMO) layer in the MUSIM assistance information element as the restriction information.

The information for restricting the secondary cell may be, for example, information for restricting a data-schedulable secondary cell. The information for restricting the secondary cell may be, for example, information indicating a preference of the UE 100 for a reduction configuration corresponding to the maximum number of secondary cells (specifically, reducedMaxCCs and ReducedMaxCCs). The information may be at least one of information indicating a preference of the UE 100 for the reduction configuration corresponding to the maximum number of downlink secondary cells (specifically, reducedCCsDL) and information indicating a preference of the UE 100 for the reduction configuration corresponding to the maximum number of uplink secondary cells (specifically, reducedCCsDL). That is, the information for restricting the secondary cell may be information for restricting the maximum number of secondary cells. Here, as described above, the secondary cell may include a primary secondary cell. In downlink, the cell may correspond to a downlink component carrier. In uplink, the cell may correspond to an uplink component carrier. In the present embodiment, configuring the cell may include configuring the downlink component carrier and/or configuring the uplink component carrier. For example, the information for restricting the secondary cell may include information for restricting the maximum number of component carriers configured in downlink and/or information for restricting the maximum number of component carriers configured in uplink.

The information for restricting the frequency band may be, for example, information for restricting the data-schedulable frequency band. The information for restricting the frequency band may be information regarding a maximum frequency band (for example, ReducedMaxBW-FRx), information regarding an aggregated bandwidth (for example, ReducedAggregatedBandwidth), information regarding a maximum frequency band of FR1 (for example, reducedMaxBW-FR1), or information regarding a maximum frequency band of FR2 (for example, reducedMaxBW-FR2 and reducedMaxBW-FR2-2). The information for restricting the frequency band may be, for example, at least one of information indicating a preference of the UE 100 for the reduction configuration corresponding to the maximum aggregated bandwidth over all downlink carriers and all uplink carriers in Frequency Range 1 (FR1) (specifically, reducedBW-FR1), information indicating a preference of the UE 100 for the reduction configuration corresponding to the maximum aggregated bandwidth over all the downlink carriers and all the uplink carriers in Frequency Range 2-1 (FR2-1) (specifically, reducedBW-FR2), and information indicating a preference of the UE 100 for the reduction configuration corresponding to the maximum aggregated bandwidth over all the downlink carriers and all the uplink carriers in Frequency Range 2 (FR2-2) (specifically, reducedBW-FR2-2). Note that a sub-carrier spacing is 15 or 30 kHz in FR1, the sub-carrier spacing is 120 or 240 kHz in FR2-1, and the sub-carrier spacing is 120, 480, or 960 kHz in FR2-2.

The information for restricting the MIMO layer may be, for example, at least one of information indicating a preference of the UE 100 for the reduction configuration corresponding to the maximum number of downlink MIMO layers or uplink MIMO layers of each serving cell operating in FR1 (specifically, reducedMaxMIMO-LayersFR1, reducedMIMO-LayersFR1-DL, and reducedMIMO-LayersFR1-UL), information indicating a preference of the UE 100 for the reduction configuration corresponding to the maximum number of downlink MIMO layers or uplink MIMO layers of each serving cell operating in FR2-1 (specifically, reducedMaxMIMO-LayersFR2, reducedMIMO-LayersFR2-DL, and reducedMIMO-LayersFR2-UL), and information indicating a preference of the UE 100 for the reduction configuration corresponding to the maximum number of downlink MIMO layers or uplink MIMO layers of each serving cell operating in FR2-2 (specifically, reducedMaxMIMO-LayersFR2-2, reducedMIMO-LayersFR2-2-DL, and reducedMIMO-LayersFR2-2-UL). Here, the serving cell may include the primary cell and/or the secondary cell.

As illustrated in E12 of Fig. 10, the controller 130 may include information (for example, referred to as nrofRxBranches) indicating the number of transceivers usable for communication with the first network 200A in the MUSIM assistance information element as the restriction information. The information may indicate the maximum number of transceivers usable for communication with the first network 200A. Furthermore, the controller 130 may include, in the MUSIM assistance information element, at least one of information indicating the number (or the maximum number) of transmitters usable for communication with the first network 200A and information indicating the number (or the maximum number) of receivers that can be used communication with the first network 200A as the restriction information.

As illustrated in E13 of Fig. 10, the controller 130 may include flag information (for example, referred to as deactivateSCG) for deactivating or releasing the secondary cell in the MUSIM assistance information element as the restriction information. The flag information may be, for example, information indicated by one bit. For example, in a case where "true" is set in the flag information, the deactivation of the secondary cell may be indicated, the release of the secondary cell may be indicated, the deactivation of the secondary cell group may be indicated, or the release of the secondary cell group may be indicated. In a case where the UE 100 performs the dual connectivity, the controller 130 may include the flag information in the MUSIM assistance information element as the restriction information. Note that, in the dual connectivity, the UE 100 in the RRC connected state is configured to use radio resources provided by two different schedulers at different locations in two different nodes (for example, next generation-radio access networks (NG-RANs)) connected via a non-ideal backhaul.

In addition, the controller 130 may include specification information to be set in an overheating assistance information element (that is, OverheatingAssistance) when providing an overheating assistance indication for communication with the second network 200B. Normally, the controller 130 may include the specification information in the overheating assistance information element based on detection of internal overheating in the UE 100. However, regardless of whether or not the internal overheating has been detected in the UE 100, the controller 130 may include the specification information in the overheating assistance information element for communication with the second network 200B. The specification information may be, for example, reducedMaxCCs, reducedMaxBW-FR1, reducedMaxBW-FR2, reducedMaxBW-FR2-2, reducedMaxMIMO-LayersFR1, reducedMaxMIMO-LayersFR2, and reducedMaxMIMO-LayersFR2-2. Therefore, regardless of whether or not the internal overheating has been detected, the communicator 120 may transmit the overheating assistance information element to the first network 200A as the restriction information for communication with the second network 200B.

Further, the controller 130 may include information for deactivating or releasing the secondary cell in the UE assistance information message as the restriction information. Here, the controller 130 may include the restriction information in an information element different from the MUSIM assistance information element among information elements included in the UE assistance information message. For example, the controller 130 may include the specification information (specifically, scg-DeactivationPreference) to be included in the UE assistance information based on a preference for the secondary cell group to be deactivated for communication with the second network 200B. Therefore, the communicator 120 may transmit information for deactivating or releasing the secondary cell to the first network 200A as the restriction information.

Note that the controller 130 may include the restriction information in the following message. For example, the restriction information may be included in a request message used for a request for the radio resource control (RRC) connection. The request message may be, for example, an RRC setup request (RRCSetupRequest) message, an RRC reestablishment request (RRCReestablishmentRequest) message, an RRC resume request (RRCResumeRequest) message, and/or an RRC resume request 1 (RRCResumeRequest1) message. The RRC setup request message is a message for requesting the establishment of the RRC connection. The RRC reestablishment request message is a message for requesting the reestablishment of the RRC connection. The RRC resume request message and the RRC resume request 1 message are messages for requesting resumption of a suspended RRC connection or performing radio access network (RAN) based notification area (RNA) update.

Further, the restriction information may be included in a complete message used to confirm that a procedure related to the radio resource control (RRC) connection has been successfully completed. The complete message may be, for example, an RRC setup complete (RRCSetupComplete) message (see E13), an RRC reestablishment complete (RRCReestablishmentComplete) message, and/or an RRC resume complete (RRCResumeComplete) message (see E14). The RRC setup complete message is a message used to confirm that the establishment of the RRC connection has been successfully completed. The RRC reestablishment complete message is a message used to confirm that the reestablishment of the RRC connection has been successfully completed. The RRC resume complete message is a message used to confirm that the resumption of the RRC connection has been successfully completed.

The restriction information may also be included in a UE information response (UEInformationResponse) message for transferring requested information to the network. Note that the UE 100 transmits the UE information response message based on a UE information request (UEInformationRequest) message from the network. The UE information request message is a message used by the network to retrieve information from the UE 100.

Note that, in a case where the UE 100 is in a state of performing simultaneous parallel communication with the first network 200A by using a plurality of transceivers, the communicator 120 may transmit the restriction information to the first network 200A. The UE 100 may transmit the restriction information to the first network 200A in a case where all the transceivers are used for the communication, or may transmit the restriction information to the first network 200A in a case where a plurality of transceivers are used even when some of the transceivers are not used for the communication.

The controller 214 of the base station 210A may determine whether or not to temporarily restrict the communication capability of the UE 100 used for communication with the first network 200A based on the restriction information. The controller 214 of the base station 210A may perform the processing of step S 106 in a case where it is determined to temporarily restrict the communication capability of the UE 100. In a case where it is determined not to temporarily restrict the communication capability of the UE 100, the controller 214 of the base station 210A may end the processing.

### Step S106:

The network communicator 213 of the base station 210A that manages the PCell 210P may transmit a scheduling stop instruction to another base station 210A that manages the SCell 210S. In the case of managing the PCell 210P and the SCell 210S, the base station 210A may transmit the scheduling stop instruction from an entity that manages the PCell 210P to an entity that manages the SCell 210S in the controller 214.

The scheduling stop instruction may be for stopping scheduling allocated to the UE 100 or for stopping a part of the scheduling allocated to the UE 100. The scheduling stop instruction may include at least a part of the restriction information.

The controller 214 of the base station 210A that manages the SCell 210S may temporarily restrict the communication capability of the UE 100 based on the scheduling stop instruction. The network communicator 213 of the base station 210A may transmit a response message indicating that the scheduling is to be stopped to the base station 210A that manages the PCell 210P. The controller 214 of the base station 210A that manages the PCell 210P may perform the processing of step S107 based on the reception of the response message.

### Step S107:

The radio communicator 212 of the base station 210A transmits a message (for example, an RRC reconfiguration message) including configuration information for temporarily restricting the communication capability of the UE 100 to the UE 100 in the PCell 210P. The communicator 120 of the UE 100 receives the message including the configuration information from the PCell 210P (the first network 200A). The message may be a response to the restriction information.

The configuration information may include information indicating a configuration (specifically, a reduction configuration) of at least one of the secondary cell (or the secondary cell group), the frequency band, and the MIMO layer.

The controller 130 (for example, the RRC processor 131) restricts the communication capability based on the configuration information. The controller 130 may reduce or release the secondary cell or the secondary cell group based on the configuration information. The controller 130 may reduce the frequency band based on the configuration information. The controller 130 may reduce the number of MIMO layers based on the configuration information.

The controller 130 performs control to continue communication with the first network 200A by using the communication capability that is not temporarily restricted among the communication capabilities of the UE 100 via some (for example, the first transceiver 121) of the plurality of transceivers. Communication with the first network 200A may be performed via the first transceiver 121 based on an RRC configuration based on the configuration information received from the first network 200A. For example, the controller 130 may maintain the RRC configuration used for communication with the first network 200A via the first transceiver 121. The controller 130 may release at least a part of the RRC configuration used for communication with the first network 200A via the second transceiver 122, and start communication with the first network 200A via the first transceiver 121 based on the remaining RRC configuration.

On the other hand, the controller 130 performs control for ending communication with the first network 200A via some (for example, the second transceiver 122) of the plurality of transceiver. For example, the controller 130 may release the RRC configuration used for communication with the first network 200A via the second transceiver 122. The controller 130 performs control to start connection with the second network 200B by restricting the communication capability.

### Step S108:

The RRC processor 131 provides a second NW switching preparation completion notification to the NAS processor 132 based on the execution of the restriction of the communication capability. The NAS processor 132 receives the second NW switching preparation completion notification from the RRC processor 131. The second NW switching preparation completion notification may be a notification indicating that preparation for establishing the RRC connection with the second network 200B has been completed.

### Step S109:

The NAS processor 132 provides a second NW connection instruction to the RRC processor 131 based on the reception of the second NW switching completion notification. The RRC processor 131 receives the RRC connection instruction from the NAS processor 132. The second NW connection instruction may be an instruction for establishing the RRC connection with the second network 200B.

### Step S110:

The RRC processor 131 performs processing for starting the RRC connection with the base station 210B based on the second NW connection instruction. The RRC processor 131 may perform, for example, an RRC setup procedure (Setup) for establishing the RRC connection or an RRC reestablishment procedure (Reestablishment) for reestablishing the RRC connection. Furthermore, the RRC processor 131 may perform an RRC resume procedure (Resume) for resuming a suspended RRC connection. In this operation example, a case where the RRC processor 131 performs the RRC setup procedure will be described as an example.

The RRC processor 131 performs control to transmit the RRC setup request message to the second network 200B (specifically, the base station 210B). The communicator 120 transmits the RRC setup request message to the second network 200B. The radio communicator 212 of the base station 210B receives the RRC setup request message from the UE 100.

### Step S111:

The radio communicator 212 of the base station 210B transmits, to the UE 100, an RRC setup message used to establish signaling radio bearer (SRB) 1. The communicator 120 of the UE 100 receives the RRC setup message from the base station 210B (the second network 200B). The controller 130 of the UE 100 performs processing for establishing the RRC connection (for example, SRB1) based on the RRC setup message. After performing the processing for establishing the RRC connection, the controller 130 performs the processing of step S114.

### Step S112:

The RRC processor 131 performs control to transmit the RRC setup complete message to the second network 200B (specifically, the base station 210B). The communicator 120 transmits the RRC setup complete message to the second network 200B. The radio communicator 212 of the base station 210B receives the RRC setup complete message from the UE 100.

In the case of not transmitting the restriction information to the second network 200B in the RRC setup procedure, the controller 130 (the RRC processor 131) may transmit notification information for notifying that the communication capability has been temporarily restricted to the second network 200B in the RRC setup procedure. The controller 130 may transmit the notification information to the second network 200B in a case where the restriction information is scheduled to be transmitted.

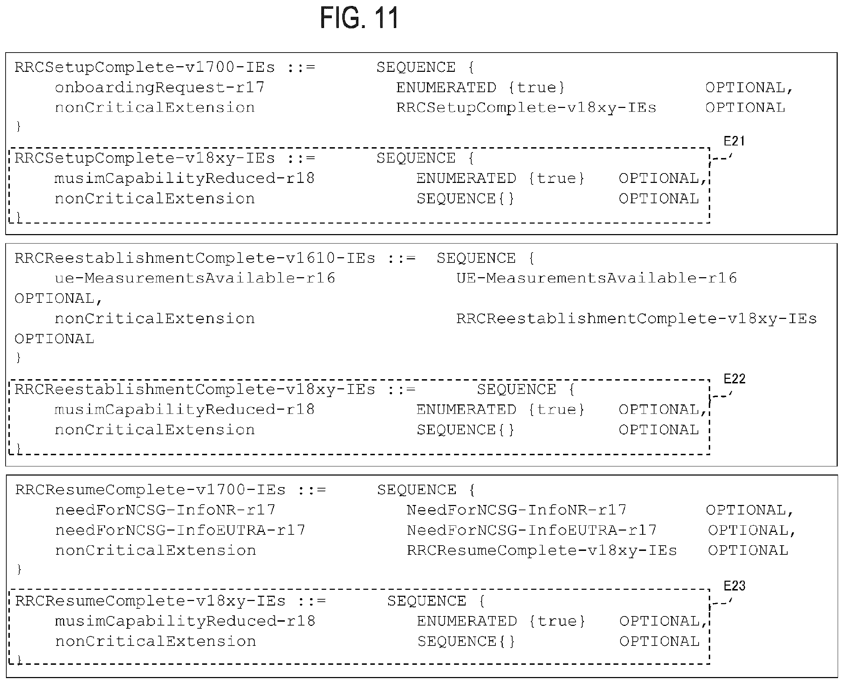

As illustrated in E21 of Fig. 11, for example, the controller 130 may include the notification information in the RRC setup complete message. The controller 130 may include the notification information in the RRC setup complete message in the case of a state where communication with the first network 200A is performed using at least one transceiver (for example, the first transceiver 121) among the plurality of transceivers and communication with the second network 200B is performed using a transceiver (for example, the second transceiver 122) different from at least one transceiver among the plurality of transceivers. Note that, for example, the controller 130 may include the notification information in the RRC setup request message (see E21 in Fig. 11).

The notification information may be, for example, information indicating a change in the communication capability of the UE 100. The notification information may be, for example, information indicating that there is a change in the communication capability of the UE 100 or information indicating that the communication capability of the UE 100 is desired (or preferred) to be changed. The notification information may be, for example, information indicating that the communication capability of the UE 100 is temporarily restricted, information indicating that the restriction of the communication capability of the UE 100 is temporarily released, and/or information indicating that the restriction of the communication capability of the UE 100 is temporarily changed. The notification information may be, for example, information indicating that a UE radio access capability is changed or updated.

The notification information may be, for example, flag information indicating that the communication capability has been temporarily restricted. As illustrated in Fig. 11, in a case where the notification information (for example, "musimCapabilityReduced (musimCapabilityReduced-r18)") includes designated information (for example, "true"), the notification information may indicate that the communication capability has been temporarily restricted. In a case where a field of the notification information is empty or the notification information indicates information other than the designated information, the notification information may indicate that the communication capability is not temporarily restricted.

The communicator 120 may transmit the notification information to the second network 200B in the case of a state where communication with the first network 200A is performed using at least one transceiver (for example, the first transceiver 121) among the plurality of transceivers and communication with the second network 200B is performed using a transceiver (for example, the second transceiver 122) different from at least one transceiver among the plurality of transceivers.

As described below, the communicator 120 can transmit the restriction information to the second network 200B after the transmission of the notification information. The communicator 120 may transmit the restriction information to the second network 200B within a designated time after the transmission of the notification information.

The controller 130 may include a timer for measuring a designated time. The controller 130 may start the timer based on the transmission of (the message including) the notification information. The designated time may be, for example, a pre-specified value. The communicator 120 may receive timer information indicating the designated time from the second network 200B. The controller 130 may set the designated time in the timer based on the timer information.

In a case where the timer expires before transmitting the restriction information, that is, in a case where the restriction information cannot be transmitted to the second network 200B within the designated time, the controller 130 may transmit the notification information to the second network 200B again. Alternatively, in a case where the timer expires before transmitting the restriction information, the controller 130 may end the processing for transmitting the restriction information to the second network 200B.

Note that the UE 100 may transmit the notification information to the second network 200B in a similar manner to the above-described RRC setup procedure in the case of performing a procedure (for example, the RRC reestablishment procedure or the RRC resume procedure) for performing processing for starting the RRC connection with the base station 210B other than the RRC setup procedure. For example, the RRC reestablishment request message, an RRC reestablishment complete message (see E22 in Fig. 11), the RRC resume request message, the RRC resume request 1 message, and/or the RRC resume complete message (see E23 in Fig. 11) may be used as the message including the notification information.

The controller 214 of the base station 210B may suspend a configuration of the UE 100 based on the reception of the notification information. The controller 214 may suspend the configuration of the UE 100 until the restriction information is received. The controller 214 may suspend the configuration of the UE 100 until a designated time elapses after the reception of the notification information. In a case where the timer information indicating the designated time is transmitted to the UE 100, the controller 214 may suspend the configuration of the UE 100 until the designated time indicated by the timer information elapses. Note that the controller 214 may start (resume) the configuration of the UE 100 in a case where the configuration of the UE 100 is suspended when the designated time has elapsed. In a case where the controller 214 has not received the restriction information until the expiration of the timer even though the notification information has been received from the UE 100, a configuration based on a UE capability information message may be used as the configuration of the UE 100.

### Step S113:

The radio communicator 212 of the base station 210B transmits, to the UE 100, a capability enquiry message (for example, a UE capability enquiry message) for requesting capability information regarding the communication capability used for communication of the second network 200B. The communicator 120 of the UE 100 receives the capability enquiry message from the second network 200B (the base station 210B). The UE capability enquiry message is a message used to request the UE radio access capability not only for other radio access technologies (RATs) but also for NR (NR radio access).

### Step S114:

The RRC processor 131 performs control to transmit a capability information message (for example, the UE capability information message) for transferring the capability information to the second network 200B. The communicator 120 transmits the capability information message to the second network 200B. The radio communicator 212 of the base station 210B receives the capability information message from the UE 100. The UE capability information message is a message used to transfer a UE access capability requested by the network. The controller 130 may include, in the capability information message, information indicating a normal communication capability (unrestricted communication capability) of the UE 100.

Note that, even when the capability information message has been received, the controller 214 of the base station 210B may suspend the configuration of the UE 100 until the designated time elapses in a case where the notification information has been received.

### Step S115:

The RRC processor 131 performs control to transmit, to the second network 200B, the restriction information for temporarily restricting the communication capability of the UE 100 used for communication with the second network 200B. The communicator 120 transmits the restriction information to the second network 200B. The communicator 120 may transmit a message including the restriction information to the PCell 210P. The radio communicator 212 of the base station 210B receives the restriction information from the UE 100 in the PCell 210P.

The message including the restriction information may be a message similar to that in step S105. Therefore, the restriction information may be included in, for example, the request message used for the request related to the RRC connection, the complete message used to confirm that the procedure related to the RRC connection has been successfully completed, the UE information response message for transferring requested information to the second network 200B, and/or the UE assistance information message.

The restriction information is used to temporarily restrict the communication capability of the UE 100 used for communication with the second network 200B. The restriction information may be information similar to that in step S105.

For example, the controller 130 may include the restriction information in the MUSIM assistance information element. Furthermore, the controller 130 may include, in the MUSIM assistance information element, at least one of the information for restricting the secondary cell, the information for restricting the frequency band, or the information for restricting the multiple-input and multiple-output (MIMO) layer, as the restriction information. Furthermore, the controller 130 may include, in the MUSIM assistance information, the information indicating the number of transceivers usable for communication with the second network 200B element as the restriction information. Furthermore, the controller 130 may include, in the MUSIM assistance information element, the flag information for deactivating or releasing the secondary cell as the restriction information. Furthermore, the controller 130 may include, in the MUSIM assistance information element, the overheating assistance information element transmitted based on the detection of the internal overheating as the restriction information regardless of whether or not the internal overheating has been detected.

The communicator 120 may transmit the restriction information to the second network 200B in the case of a state where communication with the first network 200A is performed using at least one transceiver (for example, the first transceiver 121) among the plurality of transceivers and communication with the second network 200B is performed using a transceiver (for example, the second transceiver 122) different from at least one transceiver among the plurality of transceivers.

The controller 214 of the base station 210B may determine whether or not to temporarily restrict the communication capability of the UE 100 used for communication with the second network 200B based on the restriction information. The controller 214 may perform processing similar to that of the base station 210A based on the restriction information. Note that, in a case where the configuration of the UE 100 is suspended, the controller 214 of the base station 210B may start (resume) the configuration of the UE 100.

### Step S116:

The radio communicator 212 of the base station 210B may transmit, to the UE 100, the message (for example, the RRC reconfiguration message) including the configuration information for temporarily restricting the communication capability of the UE 100. The communicator 120 of the UE 100 receives the message including the configuration information from the second network 200B (the base station 210B).

Thereafter, the UE 100 perform communication with the second network 200B. For example, the controller 130 of the UE 100 may start processing for performing communication corresponding to the paging message in the second network 200B. The controller 130 of the UE 100 may control communication with the second network 200B via the second transceiver 122. Note that the controller 130 may continuously control communication with the first network 200A via the first transceiver 121.

As described above, in the case of communicating with the first network 200A, the controller 130 temporarily restricts the communication capability of the UE 100 used for communication with the second network 200B. The communicator 120 transmits, to the second network 200B, restriction information for temporarily restricting the communication capability of the UE 100 used for communication with the second network 200B. As a result, the second network 200B can recognize the temporary restriction of the communication capability of the UE 100 based on the restriction information. Therefore, it is possible to facilitate appropriate synchronization between the UE 100 and the second network 200B for the temporary restriction of the communication capability.

Further, the restriction information may be included in the request message used for the request related to the RRC connection. As a result, the UE 100 can send the restriction information to the network when making the request related to the RRC connection, and thus, it is not necessary to transmit a new message only for notifying of the restriction information, and radio resources can be effectively utilized.

In addition, the restriction information may be included in the complete message used to confirm that the procedure related to the RRC connection has been successfully completed. As a result, the UE 100 can send the restriction information to the network when notifying that the procedure related to the RRC connection has been successfully completed, and thus, it is not necessary to transmit a new message only for notifying of the restriction information, and radio resources can be effectively utilized.

The restriction information may also be included in the UE information response message for transferring requested information to the second network 200B. As a result, the UE 100 can send the capability change notification to the network when responding to the UE information request message, and thus, it is not necessary to transmit a new message only for making the capability change notification, and radio resources can be effectively utilized.

Further, the restriction information may be included in the UE assistance information message. Accordingly, the UE 100 can voluntarily transmit the restriction information to the second network 200B.

Further, the restriction information may be included in the MUSIM assistance information element. The second network 200B can grasp that the UE 100 is transmitting the restriction information for the MUSIM operation (for example, communication with the first network 200A).

Furthermore, the controller 130 may include, in the MUSIM assistance information element, at least one of the information for restricting the secondary cell, the information for restricting the frequency band, or the information for restricting the multiple-input and multiple-output (MIMO) layer, as the restriction information. As a result, the UE 100 can notify the second network 200B that any of the secondary cell, the frequency band, and the MIMO layer is restricted (preferred).

Furthermore, the controller 130 may include, in the MUSIM assistance information, the information indicating the number of transceivers usable for communication with the second network 200B element as the restriction information. As a result, the UE 100 can notify the first network 200A of (a preference for) the transceiver usable for communication with the second network 200B.

Furthermore, the controller 130 may include, in the MUSIM assistance information element, the flag information for deactivating or releasing the secondary cell as the restriction information. As a result, the UE 100 can notify the second network 200B that the secondary cell is deactivated or released (preferred). In addition, since the flag information has a small information amount (for example, 1 bit), radio resources can be saved.

Furthermore, the controller 130 may include, in the MUSIM assistance information element, the overheating assistance information element transmitted based on the detection of the internal overheating as the restriction information regardless of whether or not the internal overheating has been detected. As a result, it is not necessary to newly specify an information element including the restriction information, so that the influence on the specification can be reduced.

Furthermore, the communicator 120 may transmit, to the second network 200B, the notification information for notifying that the communication capability has been temporarily restricted. The communicator 120 may transmit the restriction information to the second network 200B after the transmission of the notification information. As a result, the second network 200B can know that the communication capability has been temporarily restricted based on the notification information. Thereafter, the second network 200B can recognize the temporary restriction of the communication capability of the UE 100 based on the restriction information. Therefore, it is possible to facilitate appropriate synchronization between the UE 100 and the second network 200B for the temporary restriction of the communication capability.

Furthermore, the communicator 120 may transmit the restriction information to the second network 200B within the designated time after the transmission of the notification information. As a result, the second network 200B can recognize the temporary restriction of the communication capability of the UE 100 before the designated time elapses after knowing that the communication capability has been temporarily restricted.

Furthermore, the communicator 120 may receive the timer information indicating the designated time from the second network 200B. The second network 200B can flexibly control the designated time.

### (2) Second Operation Example

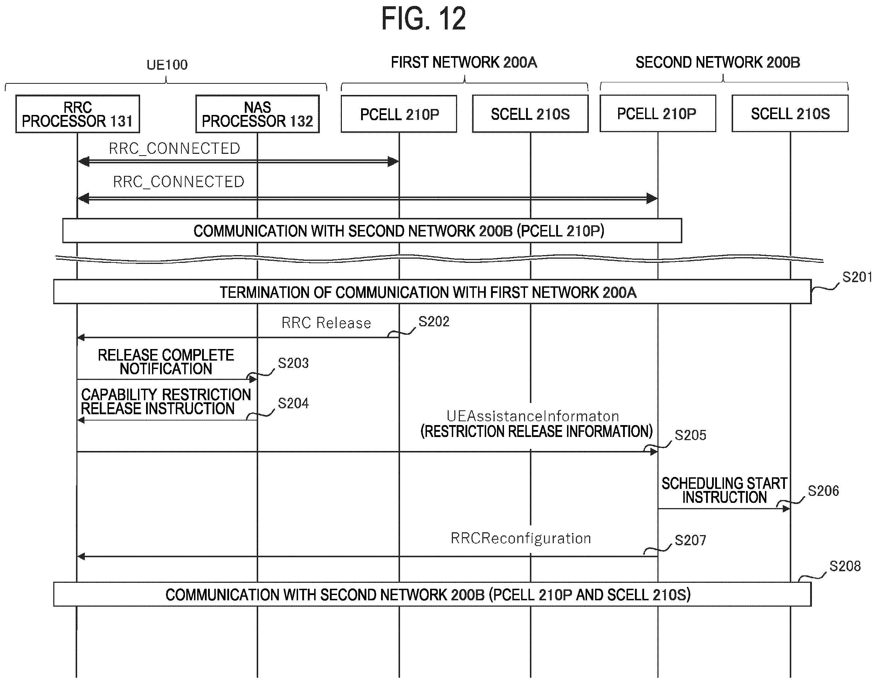

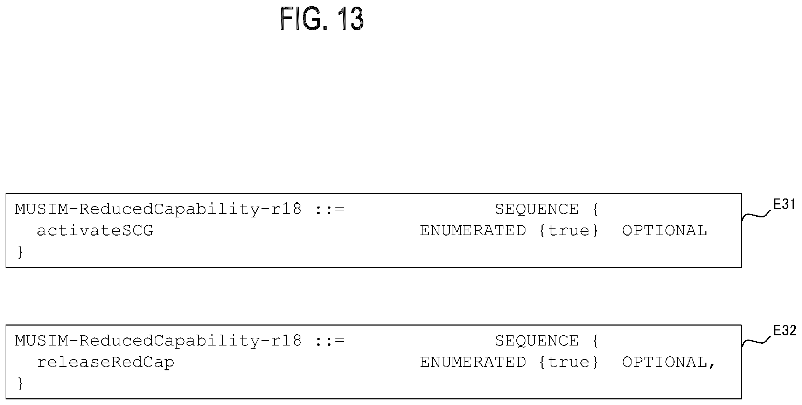

A second operation example will be described with reference to Figs. 12 and 13, focusing on differences from the above-described operation example. In the second operation example, a case where the UE 100 transmits, to the second network 200B, information for releasing or changing the temporary restriction of the communication capability will be described.

In the second operation example, the UE 100 is in the RRC connected state for the first network 200A. The UE 100 perform communication with the first network 200A. Specifically, the UE 100 perform communication with the PCell 210P (or the MCG). On the other hand, the UE 100 does not perform communication with the SCell 210S (or the SCG).

In addition, the UE 100 is in the RRC connected state for the second network 200B. The UE 100 performs communication with the second network 200B. Specifically, the UE 100 perform communication with the PCell 210P (or the MCG). On the other hand, the UE 100 does not perform communication with the SCell 210S (or the SCG). The UE 100 may use the first transceiver 121 for communication with the first network 200A and use the second transceiver 122 for communication with the second network 200B.

As in the first operation example, for communication with the second network 200B, the controller 130 of the UE 100 temporarily restricts the communication capability of the UE 100 used for communication with the first network 200A. In addition, for communication with the first network 200A, the communication capability of the UE 100 used for communication with the second network 200B is temporarily restricted.

### Step S201:

The UE 100 ends communication with the first network 200A.

### Step S202:

The radio communicator 212 of the base station 210A transmits an RRC release message to the UE 100. The communicator 120 of the UE 100 receives the RRC release message from the base station 210A. The controller 130 of the UE 100 transitions from the RRC connected state to the RRC idle state or the RRC inactive state for the first network 200A based on the reception of the RRC release message. Accordingly, the UE 100 may release the RRC connection for the first network 200A.

### Step S203:

The controller 130 (for example, the RRC processor 131) may provide a release complete notification indicating completion of the release of the RRC connection to the NAS processor 132. In response to the reception of the release complete notification, the controller 130 (for example, the NAS processor 132 or a processor of an upper layer above the NAS layer) may determine whether or not to release the temporary restriction of the communication capability of the UE 100 used for communication with the second network 200B. Furthermore, the controller 130 may determine whether or not to change the temporary restriction of the communication capability.

For example, the controller 130 may determine to release or change the temporary restriction based on transition to the RRC idle state for the first network 200A. For example, the controller 130 may determine not to release or change the temporary restriction based on transition to the RRC inactive state for the first network 200A.

The controller 130 may determine whether or not to release the temporary restriction or whether or not to change the temporary restriction based on a service provided from the second network 200B. In a case where the service provided from the second network 200B is a voice service, the controller 130 may determine to release the temporary restriction. In a case where the service provided from the second network 200B is a service other than a voice service, the controller 130 may determine not to release the temporary restriction. In this case, the controller 130 may determine to change the temporary restriction.

For example, the controller 130 may determine whether or not to release the temporary restriction and may determine whether or not to change the temporary restriction based on the input from the user. In a case where the input from the user prioritizes communication with the second network 200B over communication with the first network 200A, the controller 130 may determine to release the temporary restriction. In a case where the input from the user does not prioritize communication with the second network 200B over communication with the first network 200A, the controller 130 may determine not to release the temporary restriction.

Note that the determination may be performed in the NAS processor 132, or the determination may be performed in an upper layer above the NAS processor. When the determination is made in the upper layer, the determination result may be provided to the NAS processor 132.

In a case where it is determined to release or change the temporary restriction of the communication capability of the UE 100 used for communication with the second network 200B, the NAS processor 132 performs the processing of step S204. On the other hand, in a case where it is determined not to release or change the temporary restriction of the communication capability of the UE 100 used for communication with the second network 200B, the controller 130 may end the processing of this operation without performing the processing of step S204.

### Step S204:

As illustrated in Fig. 12, in a case where it is determined to release the temporary restriction of the communication capability of the UE 100 used for communication with the second network 200B, the NAS processor 132 provides a capability restriction release instruction to the RRC processor 131. The RRC processor 131 receives the capability restriction release instruction from the NAS processor 132. The capability restriction release instruction may be for instructing transmission of restriction release information described below. The capability restriction release instruction may indicate a content of the restriction release information.

In a case where it is determined to change the temporary restriction of the communication capability of the UE 100 used for communication with the second network 200B, the NAS processor 132 provides a capability restriction change instruction to the RRC processor 131. The RRC processor 131 receives the capability restriction change instruction from the NAS processor 132. The capability restriction change instruction may be for instructing transmission of restriction change information described below. The capability restriction change instruction may indicate a content of the restriction change information.

### Step S205:

The controller 130 (RRC processor 131) performs control to transmit the restriction release information to the second network 200B for communication with the second network 200B based on the capability restriction release instruction. The communicator 120 transmits the restriction release information to the second network 200B for communication with the second network 200B. Specifically, the communicator 120 transmits the restriction release information to the PCell 210P. The communicator 120 may transmit a message including the restriction release information to the PCell 210P. The radio communicator 212 of the base station 210B receives the restriction release information from the UE 100 in the PCell 210P. The restriction release information is used to release the temporary restriction of the communication capability of the UE 100 used for communication with the second network 200B.

The controller 130 (for example, the RRC processor 131) may include the restriction release information (for example, MUSIM-ReducedCapability) in the MUSIM assistance information element used to provide the MUSIM assistance information. The communicator 120 may transmit the MUSIM assistance information including the restriction release information to the second network 200B. The communicator 120 may transmit the UE assistance information message including the MUSIM assistance information including the restriction release information to the second network 200B.

The controller 130 may set an empty value to at least one of the information for restricting the secondary cell, the information for restricting the frequency band, and the information for restricting the multiple-input and multiple-output (MIMO) layer. The controller 130 may include the information in which the empty value is set in the MUSIM assistance information element as the restriction release information. The empty value may be a value such as zero or a null value. Alternatively, the controller 130 does not have to include, in the MUSIM assistance information element, any of the information for restricting the secondary cell, the information for restricting the frequency band, and the information for restricting the multiple-input and multiple-output (MIMO) layer. In this case, the MUSIM assistance information element that does not include the information for temporarily restricting the communication capability may be regarded as the restriction release information.

Note that the information for restricting the secondary cell, the information for restricting the frequency band, and the information for restricting the multiple-input and multiple-output (MIMO) layer are the same as those in the first operation example.

The controller 130 may include, in the MUSIM assistance information element, information indicating zero as the number of transceivers usable for communication with the second network 200B as the restriction release information. The information may indicate the maximum number of transceivers usable for communication with the second network 200B. Furthermore, the controller 130 may include, in the MUSIM assistance information element, at least one of information indicating zero as the number (or the maximum number) of transmitters usable for communication with the second network 200B and information indicating zero as the number (or the maximum number) of receivers usable for communication with the second network 200B as the restriction release information. The controller 130 may set an empty value in the information indicating the number of transceivers, transmitters, or receivers.

As illustrated in E31 of Fig. 13, the controller 130 may include flag information (for example, referred to as activateSCG) for activating the secondary cell in the MUSIM assistance information element as the restriction release information. The flag information may be, for example, information indicated by one bit. For example, in a case where "true" is set in the flag information, the activation of the secondary cell may be indicated, or the activation of the secondary cell group may be indicated. In a case where the UE 100 performs the dual connectivity before temporarily restricting the communication capability, the controller 130 may include the flag information in the MUSIM assistance information element as the restriction release information.

The controller 130 does not have to include the specification information to be set in the overheating assistance information element when providing the overheating assistance indication. Normally, the controller 130 does not include the specification information in the overheating assistance information element based on the fact that the internal overheating is no longer detected in the UE 100 (for example, an overheating condition is no longer experienced). However, regardless of whether or not the internal overheating is no longer detected in the UE 100, the controller 130 does not have to include the specification information in the overheating assistance information element. Therefore, regardless of whether or not the internal overheating is no longer detected, the communicator 120 may transmit the overheating assistance information element that does not include the specification information to the second network 200B as the restriction release information for communication with the second network 200B.

Furthermore, as illustrated in E32 of Fig. 13, the controller 130 may include, in the MUSIM assistance information element, information (for example, releaseRedCap) indicating release of the temporary restriction of the communication capability of the UE 100 used for communication with the second network 200B as restriction release information. For example, in a case where "true" is set in the information, the information may indicate that the temporary restriction of the communication capability is released.

Further, the controller 130 may include the information for activating the secondary cell in the UE assistance information message as the restriction release information. Here, the controller 130 may include the restriction release information in an information element different from the MUSIM assistance information element among the information elements included in the UE assistance information message. For example, the controller 130 may include the specification information (specifically, scg-ActivationPreference) to be included in the UE assistance information based on a preference for the secondary cell group to be activated. Therefore, the communicator 120 may transmit the information for activating the secondary cell to the second network 200B as the restriction release information.

In addition, the controller 130 (the RRC processor 131) may perform control to transmit the restriction change information to the second network 200B based on the capability restriction change instruction. The communicator 120 may transmit the restriction change information to the second network 200B. Specifically, the communicator 120 may transmit the restriction change information to the PCell 210P. The communicator 120 may transmit a message including the restriction change information to the PCell 210P. The radio communicator 212 of the base station 210B receives the restriction change information from the UE 100 in the PCell 210P. For communication with the first network 200A, the restriction change information is used to change the temporary restriction of the communication capability of the UE 100 used for communication with the second network 200B.

The controller 130 (for example, the RRC processor 131) may include the restriction change information (for example, MUSIM-ReducedCapability) in the MUSIM assistance information element used to provide the MUSIM assistance information. The communicator 120 may transmit the MUSIM assistance information including the restriction change information to the second network 200B. The communicator 120 may transmit the UE assistance information message including the MUSIM assistance information including the restriction change information to the second network 200B.

The controller 130 may include, in the MUSIM assistance information element, at least one of the information for restricting the secondary cell, the information for restricting the frequency band, or the information for restricting the multiple-input and multiple-output (MIMO) layer, as the restriction change information. The controller 130 may include, in the MUSIM assistance information element, information indicating the restriction after the change in the communication capability as the restriction change information. Note that the information for restricting the secondary cell, the information for restricting the frequency band, and the information for restricting the multiple-input and multiple-output (MIMO) layer are the same as those in the first operation example.

The controller 130 may include information (for example, referred to as nrofRxBranches) indicating the number of transceivers usable for communication with the second network 200B in the MUSIM assistance information element as the restriction change information. Furthermore, the controller 130 may include, in the MUSIM assistance information element, at least one of information indicating the number (or the maximum number) of transmitters usable for communication with the second network 200B and information indicating the number (or the maximum number) of receivers usable for communication with the second network 200B as the restriction change information.

Further, the controller 130 may include the specification information to be set in the overheating assistance information element when providing the overheating assistance indication. Normally, the controller 130 may include the specification information in the overheating assistance information element based on detection of internal overheating in the UE 100. However, regardless of whether or not internal overheating has been detected in the UE 100, the controller 130 may include the specification information in the overheating assistance information element.
Therefore, regardless of whether or not the internal overheating has been detected, the communicator 120 may transmit the overheating assistance information element as the restriction change information to the second network 200B for communication with the first network 200A.

Furthermore, the controller 130 may include, in the MUSIM assistance information element, gap preference information (for example, musim-GapPreferenceList and MUSIM-GapPrefInfo) indicating a gap for the MUSIM operation, the gap being preferred to be configured by the UE 100, together with the restriction release information or the restriction change information. Furthermore, the controller 130 may include the MUSIM assistance information element including the gap preference information in the UE assistance information message including the restriction release information or the restriction change information. The controller 130 may include the gap preference information in the MUSIM assistance information element based on the end of communication with the first network 200A. Note that the controller 130 may include the MUSIM assistance information element including the gap preference information in the UE assistance information message including the restriction release information or the restriction change information.

The gap preference information may include, for example, at least one of information indicating a length of an MUSIM gap length preferred by the UE 100 (for example, musim-GapLength), information indicating a gap offset of the MUSIM gap preferred by the UE 100 (for example, musim-GapOffset), information indicating a gap start position of an aperiodic MUSIM gap preferred by the UE 100 while maintaining the RRC connected state (for example, musim-PrefStarting-SFN-AndSubframex), and information indicating a gap reception duration and a gap offset of a periodic MUSIM gap preferred by the UE 100 while maintaining the RRC connected state (for example, musim-GapRepetitionAndOffsetPeriod).

Note that the communicator 120 may include a plurality of transceivers. The communicator 120 may transmit the restriction release information or the restriction change information to the second network 200B in the case of a state where the UE 100 communicates with the second network 200B by using at least one transceiver among the plurality of transceivers and ends communication with the first network 200A by using a transceiver different from at least one transceiver among the plurality of transceivers.

The controller 214 of the base station 210B may determine whether or not to release or change the temporary restriction of the communication capability of the UE 100 used for communication with the second network 200B based on the restriction release information or the restriction change information. The controller 214 of the base station 210B may perform the processing of step S106 in a case where it is determined to release or change the temporary restriction of the communication capability of the UE 100. The controller 214 of the base station 210B may end the processing in a case where it is determined not to release or change the temporary restriction of the communication capability of the UE 100.

### Step S206:

The network communicator 213 of the base station 210B that manages the PCell 210P may transmit a scheduling start instruction to another base station 210B that manages the SCell 210S. In the case of managing the PCell 210P and the SCell 210S, the base station 210B may transmit the scheduling start instruction from an entity that manages the PCell 210P to an entity that manages the SCell 2108S in the controller 214.

The scheduling start instruction may be for starting scheduling allocated to the UE 100 or for starting a part of the scheduling allocated to the UE 100. The scheduling start instruction may include at least a part of the restriction change information.

The controller 214 of the base station 210B that manages the SCell 210S may release the temporary restriction of the communication capability of the UE 100 based on the scheduling start instruction. The network communicator 213 of the base station 210B may transmit a response message indicating that the scheduling is to be started to the base station 210B that manages the PCell 210P. The controller 214 of the base station 210B that manages the PCell 210P may perform the processing of step S207 based on the reception of the response message.

### Step S207:

The radio communicator 212 of the base station 210B transmits a message (for example, the RRC reconfiguration message) including configuration information for releasing or changing the temporary restriction of the communication capability of the UE 100 to the UE 100 in the PCell 210P. The communicator 120 of the UE 100 receives the message including the configuration information from the PCell 210P (the second network 200B). The message may be a response to the restriction release information or the restriction change information.

The configuration information may include information indicating a configuration of at least one of the secondary cell (or the secondary cell group), the frequency band, and the MIMO layer. The configuration information may include information for configuring an MUSIM gap. The information may indicate the configuration of the MUSIM gap preferred by the UE 100, or may indicate a configuration of a different MUSIM gap.

### Step S208:

The UE 100 starts communication with the SCell 210S (or the SCG) while maintaining communication with the PCell 210P (or the MCG).

The controller 130 (for example, the RRC processor 131) releases or changes the restriction of the communication capability based on the configuration information. The controller 130 may configure the secondary cell or the secondary cell group based on the configuration information. The controller 130 may configure the frequency band based on the configuration information. The controller 130 may configure the number of MIMO layers based on the configuration information.

Based on the RRC configuration based on the configuration information received from the second network 200B, the controller 130 may perform communication with the second network 200B via the first transceiver 121 in addition to communication with the second network 200B via the second transceiver 122. For example, the controller 130 may perform communication with the PCell 210P (or the MSG) via the second transceiver 122 and perform communication with the SCell 210S (or the SCG) via the first transceiver 121.

The configuration information may include information for configuring an MUSIM gap. As an example of an MUSIM operation, the controller 130 may monitor the paging or attempt to receive a system information block in the first network 200A during the configured MUSIM gap.

As described above, the communicator 120 may transmit the restriction release information or the restriction change information for releasing or changing the temporary restriction of the communication capability to the second network 200B.
As a result, the second network 200B can recognize the temporary restriction of the communication capability of the UE 100 based on the restriction release information or the restriction change information. Therefore, it is possible to facilitate appropriate synchronization between the UE 100 and the second network 200B for the temporary restriction of the communication capability.

Further, the communicator may transmit the restriction release information or the restriction change information to the second network 200B in the case of a state where the UE 100 communicates with the second network 200B by using at least one transceiver among the plurality of transceivers and ends communication with the first network 200A by using a transceiver different from at least one transceiver among the plurality of transceivers. As a result, for communication with the second network 200B, the UE 100 can use the transceiver used for communication with the first network 200A.

### [Other Embodiments]

In the above-described embodiment, a case where the UE 100 includes two transceivers has been described, but the present disclosure is not restricted thereto. It is sufficient if the UE 100 includes a plurality of transceivers. For example, the UE 100 may include three or more transceivers.

In the above-described embodiment, the UE 100 initiates a procedure for transmitting the restriction information due to the paging from the first network 200A, but the present disclosure is not restricted thereto. The UE 100 may initiate the procedure, for example, due to the input from the user.

The operation sequence (and the operation flow) in the above-described embodiment does not have to necessarily be performed in time series according to the order described in the flow chart or sequence diagram. For example, the steps in the operation may be performed in an order different from the order described in the flowchart or the sequence diagram, or may be performed in parallel. In addition, some of the steps in the operation may be removed or additional steps may be added to the processing. Furthermore, the operation sequence (and the operation flow) in the above-described embodiment may be performed independently, or a combination of two or more operation sequences (and operation flows) may be performed. For example, some steps in one operation flow may be added to other operation flows, or some steps in one operation flow may be replaced with some steps in other operation flows.

In the above-described embodiment, the mobile communication system based on NR has been described as an example of the mobile communication system 1. However, the mobile communication system 1 is not limited to this example. The mobile communication system 1 may be a system conforming to a TS of long term evolution (LTE) or another generation system (for example, the 6th generation) of the 3GPP standard. The base station 210 may be an eNB configured to provide E-UTRA user plane and control plane protocol terminations toward the UE 100 in LTE. The mobile communication system 1 may be a system conforming to a TS defined in a standard other than the 3GPP standard. The base station 210 may be an integrated access and backhaul (IAB) donor or an IAB node.

A program for causing a computer to perform each processing to be performed by the UE 100 or the base station 210 may be provided. The program may be recorded in a computer-readable medium. By using the computer-readable medium, the program can be installed in the computer. Here, the computer-readable medium in which the program is recorded may be a non-transitory recording medium. The non-transitory recording medium is not particularly limited, and may be, for example, a recording medium such as a compact disk read only memory (CD-ROM) or a digital versatile disc read only memory (DVD-ROM). Furthermore, a circuit that performs each processing to be performed by the UE 100 or the base station 210 may be integrated, and at least a part of the UE 100 or the base station 210 may be configured as a semiconductor integrated circuit (a chipset or a system on chip (SoC)).

In the above-described embodiment, the term "transmit" may mean performing processing of at least one layer in a protocol stack used for transmission, or may mean physically transmitting a signal in a wireless or wired manner.
Alternatively, the term "transmit" may mean a combination of performing processing of at least one layer in a protocol stack used for transmission and physically transmitting a signal in a wireless or wired manner. Similarly, the term "receive" may mean performing processing of at least one layer in a protocol stack used for reception, or may mean physically receiving a signal in a wireless or wired manner. Alternatively, the term "receive" may mean a combination of performing processing of at least one layer in a protocol stack used for reception and physically receiving a signal in a wireless or wired manner. Similarly, the term "obtain/acquire" may mean obtaining/acquiring information from stored information, may mean obtaining/acquiring information from information received from another node, or may mean obtaining/acquiring information by generating the information. Similarly, the term "based on" and "depending on/in response to" do not mean "only based on" or "only depending on/in response to" unless explicitly stated otherwise. The term "based on" means both "only based on" and "at least partially based on". Similarly, the term "depending on/in response to" means both "only depending on/in response to" and "at least partially depending on/in response to". Similarly, the terms "include" and "comprise" do not mean including only enumerated items, but mean both including only enumerated items and including additional items in addition to the enumerated items. Similarly, in the present disclosure, "or" does not mean exclusive OR but means OR. Moreover, any reference to elements using designations such as "first", "second", and the like used in the present disclosure does not generally limit the amount or order of those elements. These designations may be used in the present disclosure as a convenient method to distinguish between two or more elements. Therefore, references to first and second elements do not mean that only two elements can be employed therein or that the first element should precede the second element in any form. In the present disclosure, when articles such as a, an, and the in English are added by translation, these articles cover the plural meaning unless the context clearly indicates otherwise.

Although the present disclosure has been described in accordance with examples, it is understood that the present disclosure is not limited to the examples or structures. The present disclosure also covers various modified examples or modifications made within an equivalent range. In addition, various combinations and modes, and other combinations and modes including only one element, more elements, or less elements are also within the scope and idea of the present disclosure.

### (Supplementary Notes)

Features related to the above-described embodiments are additionally described.

### (Supplementary Note 1)

A communication apparatus configured to communicate with a plurality of networks by using a plurality of subscriber identity modules, the communication apparatus comprising:
a controller configured to temporarily restrict a communication capability of the communication apparatus used for communication with a second network in a case of communicating with a first network; and
a communicator configured to transmit restriction information for temporarily restricting the communication capability to the second network.

### (Supplementary Note 2)

The communication apparatus according to supplementary note 1, wherein
the restriction information is included in a request message used for a request related to a radio resource control (RRC) connection.

### (Supplementary Note 3)

The communication apparatus according to supplementary note 1 or 2, wherein
the restriction information is included in a complete message used to confirm that a procedure related to a radio resource control (RRC) connection has been successfully completed.

### (Supplementary Note 4)

The communication apparatus according to any one of supplementary notes 1 to 3, wherein
the restriction information is included in a user equipment (UE) information response message for transferring requested information to the second network.

### (Supplementary Note 5)

The communication apparatus according to any one of supplementary notes 1 to 4, wherein
the restriction information is included in a UE assistance information message used for an indication of UE assistance information.

### (Supplementary Note 6)

The communication apparatus according to supplementary note 5, wherein
the restriction information is included in a multiple universal subscriber identity module (MUSIM) assistance information element used to provide MUSIM assistance information.

### (Supplementary Note 7)

The communication apparatus according to supplementary note 6, wherein
the controller is configured to include, in the MUSIM assistance information element, at least one of information for restricting a secondary cell, information for restricting a frequency band, and information for restricting a multiple-input and multiple-output (MIMO) layer as the restriction information.

### (Supplementary Note 8)

The communication apparatus according to supplementary note 6 or 7, wherein
the controller is configured to include, in the MUSIM assistance information element, information indicating the number of transceivers usable for communication with the second network as the restriction information.

### (Supplementary Note 9)

The communication apparatus according to any one of supplementary notes 6 to 8, wherein
the controller is configured to include, in the MUSIM assistance information element, flag information for deactivating or releasing a secondary cell as the restriction information.

### (Supplementary Note 10)

The communication apparatus according to any one of supplementary notes 6 to 9, wherein
the controller is configured to include, in the MUSIM assistance information element, an overheating assistance information element transmitted based on detection of internal overheating as the restriction information regardless of whether or not the internal overheating has been detected.

### (Supplementary Note 11)

The communication apparatus according to any one of supplementary notes 1 to 10, wherein
the communicator is configured to transmit information for releasing or changing the temporary restriction of the communication capability to the second network.

### (Supplementary Note 12)

The communication apparatus according to supplementary note 11, wherein the communicator comprises a plurality of transceivers, and
the communicator is configured to transmit the information for releasing or changing the temporary restriction to the second network in a case of a state where the communication apparatus communicates with the second network by using at least one transceiver among the plurality of transceivers and ends communication with the first network by using a transceiver different from the at least one transceiver among the plurality of transceivers.

### (Supplementary Note 13)

The communication apparatus according to any one of supplementary notes 1 to 12, wherein
the communicator is configured to transmit notification information for notifying that the communication capability is temporarily restricted to the second network, and
the communicator is configured to transmit the restriction information to the second network after the transmission of the notification information.

### (Supplementary Note 14)

The communication apparatus according to supplementary note 13, wherein the communicator is configured to transmit the restriction information to the second network within a designated time after the transmission of the notification information.

### (Supplementary Note 15)

The communication apparatus according to supplementary note 14, wherein the communicator is configured to receive timer information indicating the designated time from the second network.

### (Supplementary Note 16)

A base station of a network in a mobile communication system including a communication apparatus configured to communicate with a plurality of networks by using a plurality of subscriber identity modules, the base station comprising:
a communicator configured to receive, from the communication apparatus communicating with another network, restriction information for temporarily restricting a communication capability of the communication apparatus used for communication with the network.

### (Supplementary Note 17)

A communication method executed by a communication apparatus configured to communicate with a plurality of networks by using a plurality of subscriber identity modules, the communication method comprising the steps of:
temporarily restricting a communication capability of the communication apparatus used for communication with a second network in a case of communicating with a first network; and
transmitting restriction information for temporarily restricting the communication capability to the second network.

## Claims

1. A communication apparatus (100) configured to communicate with a plurality of networks (200) by using a plurality of subscriber identity modules, the communication apparatus comprising:
a controller (130) configured to temporarily restrict a communication capability of the communication apparatus used for communication with a second network (200B) in a case of communicating with a first network (200A); and
a communicator (120) configured to transmit restriction information for temporarily restricting the communication capability to the second network.

2. The communication apparatus according to claim 1, wherein
the restriction information is included in a request message used for a request related to a radio resource control (RRC) connection.

3. The communication apparatus according to claim 1 or 2, wherein
the restriction information is included in a complete message used to confirm that a procedure related to a radio resource control (RRC) connection has been successfully completed.

4. The communication apparatus according to claim 1 or 2, wherein
the restriction information is included in a user equipment (UE) information response message for transferring requested information to the second network.

5. The communication apparatus according to claim 1 or 2, wherein
the restriction information is included in a UE assistance information message used for an indication of UE assistance information.

6. The communication apparatus according to claim 5, wherein
the restriction information is included in a multiple universal subscriber identity module (MUSIM) assistance information element used to provide MUSIM assistance information.

7. The communication apparatus according to claim 6, wherein
the controller is configured to include, in the MUSIM assistance information element, at least one of information for restricting a secondary cell, information for restricting a frequency band, and information for restricting a multiple-input and multiple-output (MIMO) layer as the restriction information.

8. The communication apparatus according to claim 6, wherein
the controller is configured to include, in the MUSIM assistance information element, information indicating the number of transceivers usable for communication with the second network as the restriction information.

9. The communication apparatus according to claim 6, wherein
the controller is configured to include, in the MUSIM assistance information element, flag information for deactivating or releasing a secondary cell as the restriction information.

10. The communication apparatus according to claim 6, wherein
the controller is configured to include, in the MUSIM assistance information element, an overheating assistance information element transmitted based on detection of internal overheating as the restriction information regardless of whether or not the internal overheating has been detected.

11. The communication apparatus according to claim 1 or 2, wherein
the communicator is configured to transmit information for releasing or changing the temporary restriction of the communication capability to the second network.

12. The communication apparatus according to claim 11, wherein
the communicator comprises a plurality of transceivers, and
the communicator is configured to transmit the information for releasing or changing the temporary restriction to the second network in a case of a state where the communication apparatus communicates with the second network by using at least one transceiver among the plurality of transceivers and ends communication with the first network by using a transceiver different from the at least one transceiver among the plurality of transceivers.

13. The communication apparatus according to claim 1 or 2, wherein
the communicator is configured to transmit notification information for notifying that the communication capability is temporarily restricted to the second network, and
the communicator is configured to transmit the restriction information to the second network after the transmission of the notification information.

14. The communication apparatus according to claim 13, wherein
the communicator is configured to transmit the restriction information to the second network within a designated time after the transmission of the notification information.

15. The communication apparatus according to claim 14, wherein
the communicator is configured to receive timer information indicating the designated time from the second network.

16. A base station (210B) of a network (200B) in a mobile communication system including a communication apparatus (100) configured to communicate with a plurality of networks (200) by using a plurality of subscriber identity modules, the base station (210B) comprising
a communicator (212) configured to receive, from the communication apparatus communicating with another network (200A), restriction information for temporarily restricting a communication capability of the communication apparatus used for communication with the network.

17. A communication method executed by a communication apparatus (100) configured to communicate with a plurality of networks (200) by using a plurality of subscriber identity modules, the communication method comprising the steps of:
temporarily restricting a communication capability of the communication apparatus used for communication with a second network (200B) in a case of communicating with a first network (200A); and
transmitting restriction information for temporarily restricting the communication capability to the second network.
